# EUROPEAN PATENT APPLICATION

(11) **EP 3 739 889 A1**
(43) Date of publication of application: **18.11.2020**
(21) Application number: 19738277.3
(22) Date of filing: 10.01.2019
(51) Int. Cl.: H04N 21/238, H04N 21/462, H04N 21/84

(54) **TRANSMISSION DEVICE, TRANSMISSION METHOD, RECEPTION DEVICE AND RECEPTION METHOD**

(30) Priority: 12.01.2018 JP 2018003860
(71) Applicant: Sony Corporation, 108-0075 Tokyo (JP)
(72) Inventor: TSUKAGOSHI, Ikuo, Tokyo 108-0075 (JP)
(74) Representative: 2SPL Patentanwälte PartG mbB
(86) International application number: PCT/JP2019/000591
(87) International publication number: WO 2019/139099

(57) **Abstract**

A certain partial image in a wide viewing angle image is made displayable between receivers by use or by user with consistency.

A coded stream obtained by encoding image data of a wide viewing angle image is transmitted and rendering meta information including information of a predetermined number of viewpoints registered in groups is transmitted. For example, the information of a viewpoint includes information of an azimuth angle (azimuth information) and an elevation angle (elevation information) indicating a position of the viewpoint.

## Description

### TECHNICAL FIELD

The present technology relates to a transmission device, a transmission method, a reception device, and a reception method, and more particularly to a transmission device that transmits a wide viewing angle image, and the like.

### BACKGROUND ART

A wide viewing angle image is captured using a mirror, a lens, or the like corresponding to a wide viewing angle. For example, Patent Document 1 describes an omnidirectional image or the like as a wide viewing angle image.

In a case of transmitting moving image data of a wide viewing angle image, a portion to be displayed differs on a reception side at the time of display depending on a manner of conversion. Therefore, in a case where a certain partial image in the wide viewing angle image is desired to be displayed between receivers with consistency, there is conventionally a problem that no method therefor is present.

### CITATION LIST

### PATENT DOCUMENT

Patent Document 1: Japanese Patent Application Laid-Open No. 2009-200939

### SUMMARY OF THE INVENTION

### PROBLEMS TO BE SOLVED BY THE INVENTION

An object of the present technology is to make a certain partial image in a wide viewing angle image displayable between receivers by use or by user with consistency.

### SOLUTIONS TO PROBLEMS

A concept of the present technology resides in
a transmission device including
a transmission unit configured to transmit a coded stream obtained by encoding image data of a wide viewing angle image and transmit rendering meta information including information of a predetermined number of viewpoints registered in groups.

In the present technology, the transmission unit transmits the coded stream obtained by encoding image data of a wide viewing angle image and transmits the rendering meta information. The rendering meta information includes the information of a predetermined number of viewpoints registered in groups. For example, the wide viewing angle image may be a projection picture obtained by cutting out part or all of a spherical captured image and performing plane packing for the cutout spherical captured image. Furthermore, for example, the information of a viewpoint may include information of an azimuth angle (azimuth information) and an elevation angle (elevation information) indicating a position of the viewpoint.

For example, the transmission unit may insert the rendering meta information into a layer of the coded stream and/or a layer of a container including the coded stream and transmit the rendering meta information. In this case, for example, the transmission unit may further transmit a metafile including meta information regarding the coded stream, and the metafile may include identification information indicating the insertion of the rendering meta information in the layer of the coded stream and/or of the container.

Furthermore, in this case, for example, the container may be an ISOBMFF, and the transmission unit may insert the rendering meta information into a moov box and transmit the rendering meta information. Furthermore, in this case, the container may be an ISOBMFF, and the transmission unit may transmit the rendering meta information, using a track different from a track including the coded stream obtained by encoding image data of a wide viewing angle image.

Furthermore, in this case, for example, the container may be an MPEG2-TS, and the transmission unit may insert the rendering meta information into a program map table and transmit the rendering meta information. Furthermore, in this case, for example, the container may be an MMT stream, and the transmission unit may insert the rendering meta information into an MMT package table and transmit the rendering meta information.

Furthermore, for example, the coded stream obtained by encoding image data of a wide viewing angle image may be a coded stream corresponding to a divided region obtained by dividing the wide viewing angle image. In this case, for example, the coded stream of each divided region may be obtained by individually encoding each divided region of the wide viewing angle image. Furthermore, in this case, for example, the coded stream of each divided region may be obtained by performing encoding using a tile function using each divided region of the wide viewing angle image as a tile. Furthermore, in this case, for example, the information of a viewpoint may include information of a divided region where the viewpoint is located.

As described above, in the present technology, a coded stream obtained by encoding image data of a wide viewing angle image and rendering meta information including information of a predetermined number of viewpoints registered in groups are transmitted. Therefore, a reception side can process the image data of the wide viewing angle image obtained by decoding the coded stream on the basis of the rendering meta information to obtain display image data and can display a certain partial image in the wide viewing angle image between receivers by use or by user with consistency.

Furthermore, another concept of the present technology resides in
a reception device including
a reception unit configured to receive a coded stream obtained by encoding image data of a wide viewing angle image and receive rendering meta information including information of a predetermined number of viewpoints registered in groups, and
a processing unit configured to process the image data of a wide viewing angle image obtained by decoding the coded stream on the basis of the rendering meta information to obtain display image data.

In the present technology, the reception unit receives the coded stream obtained by encoding image data of a wide viewing angle image and receives the rendering meta information. The rendering meta information includes the information of a predetermined number of viewpoints registered in groups.

The processing unit processes the image data of a wide viewing angle image obtained by decoding the coded stream on the basis of the rendering meta information to obtain the display image data. For example, the processing unit may use the information of a viewpoint of a group determined according to an attribute of a user or contract content. In this case, for example, the processing unit may obtain the display image data having a position indicated by the information of a viewpoint selected by a user operation as a center position.

Furthermore, for example, the reception unit may receive, as the coded stream obtained by encoding image data of a wide viewing angle image, a coded stream of each divided region obtained by dividing the wide viewing angle image, and the processing unit may decode coded streams of a predetermined number of divided regions to be used for obtaining the display image data, of the coded streams each corresponding to each divided region. In this case, for example, the reception unit may request a distribution server to transmit the coded streams of a predetermined number of divided regions, and receive the coded streams of the predetermined number of divided regions from the distribution server.

As described above, in the present technology, the image data of a wide viewing angle image obtained by decoding the coded stream is processed on the basis of the rendering meta information including information of a predetermined number of viewpoints registered in groups to obtain display image data. Therefore, a certain partial image in a wide viewing angle image can be displayed between receivers by use or by user with consistency.

### EFFECTS OF THE INVENTION

According to the present technology, a certain partial image in a wide viewing angle image can be displayed between receivers by use or by user with consistency. Note that effects described here are not necessarily limited, and any of effects described in the present disclosure may be exhibited.

### BRIEF DESCRIPTION OF DRAWINGS

Fig. 1 is a block diagram illustrating a configuration example of an MPEG-DASH-based stream distribution system.
Fig. 2 is a diagram illustrating an example of a relationship among structures hierarchically arranged in an MPD file.
Fig. 3 is a block diagram illustrating a configuration example of a transmission/reception system as an embodiment.
Fig. 4 is a diagram schematically illustrating a configuration example of a whole system of the transmission/reception system.
Fig. 5 is diagrams for describing plane packing for obtaining a projection picture from a spherical captured image.
Fig. 6 is a diagram illustrating a structure example of an SPS NAL unit in HEVC encoding.
Fig. 7 is a diagram for describing that a center O (p, q) of a cutout position is made coincident with a reference point RP (x, y) of a projection picture.
Fig. 8 is a diagram illustrating a division example of a projection picture.
Fig. 9 is a diagram illustrating a structure example of rendering metadata.
Fig. 10 is a diagram illustrating content of main information in the structure example illustrated in Fig. 9.
Fig. 11 is a diagram for describing each piece of information in the structure example illustrated in Fig. 9.
Fig. 12 is a diagram illustrating a structure example of "viewpoint_grid()".
Fig. 13 is a diagram illustrating content of main information in the structure example illustrated in Fig. 12.
Fig. 14 is diagrams for describing a viewpoint grid that is a registered viewpoint.
Fig. 15 is diagrams for describing an example of grouping by viewpoint grid category.
Fig. 16 is diagrams illustrating a display example of users of groups 1 to 3 in the grouping in Fig. 15.
Fig. 17 is diagrams for describing another example of grouping by viewpoint grid category.
Fig. 18 is diagrams illustrating a display example of users of groups 1 to 3 in the grouping in Fig. 17.
Fig. 19 is diagrams for describing another example of grouping by viewpoint grid category.
Fig. 20 is diagrams illustrating a display example of users of groups 1 and 2 in the grouping in Fig. 19.
Fig. 21 is a diagram illustrating an example of an MP4 stream as a distribution stream.
Fig. 22 is diagrams for describing encoding using a tile function using each partition as a tile.
Fig. 23 is a diagram illustrating a structure example of a partition descriptor.
Fig. 24 is a diagram illustrating content of main information in the structure example in Fig. 23.
Fig. 25 is a diagram illustrating a description example of an MPD file corresponding to a tile-based MP4 stream (tile-based container).
Fig. 26 is a diagram illustrating a description example of an MPD file corresponding to an MP4 stream of each partition.
Fig. 27 is a diagram schematically illustrating an example of an MP4 stream (track) in a case of performing encoding using a tile function using each partition as a tile.
Fig. 28 is a diagram schematically illustrating an example of an MP4 stream (track) in a case of individually encoding each partition.
Fig. 29 is a diagram illustrating an example of dividing an 8 K/60 Hz-class projection picture by a 1920 × 1080 (Full HD) partition size.
Fig. 30 is diagrams illustrating an example of movement control of a display region in a case of using an HMD as a display device.
Fig. 31 is diagrams illustrating an example of movement control of a display region in a case of using a display panel as a display device.
Fig. 32 is a diagram illustrating an example of switching a distribution stream set associated with movement of a display region.
Fig. 33 is a diagram illustrating an example of switching a distribution stream set associated with movement of a display region.
Fig. 34 is a block diagram illustrating a configuration example of a service transmission system.
Fig. 35 is a block diagram illustrating a configuration example of a service receiver.
Fig. 36 is a diagram illustrating a configuration example of a transport stream in a case where video encoding is tile-compatible.
Fig. 37 is a diagram illustrating a configuration example of an MMT stream in a case where video encoding is tile-compatible.
Fig. 38 is a diagram illustrating a description example of an MPD file in a case where a tile stream has a single stream configuration.
Fig. 39 is a diagram schematically illustrating an example of an MP4 stream (track) in a case where a tile stream has a single stream configuration.
Fig. 40 is a diagram illustrating a configuration example of a transport stream in a case where a tile stream has a single stream configuration.
Fig. 41 is a diagram illustrating a configuration example of an MMT stream in a case where a tile stream has a single stream configuration.
Fig. 42 is a diagram schematically illustrating another example of an MP4 stream (track) in a case of performing encoding using a tile function using each partition as a tile.
Fig. 43 is a diagram schematically illustrating another example of an MP4 stream (track) in a case of individually encoding each partition.
Fig. 44 is a diagram schematically illustrating an example of an MP4 stream (track) in a case where a tile stream has a single stream configuration.

### MODE FOR CARRYING OUT THE INVENTION

Hereinafter, a mode for implementing the present invention (hereinafter referred to as an "embodiment") will be described. Note that the description will be given in the following order.
1. Embodiment
2. Modification

### <1. Embodiment>

### [Overview of MPEG-DASH-based Stream Distribution System]

First, an overview of an MPEG-DASH-based stream distribution system to which the present technology can be applied will be described.

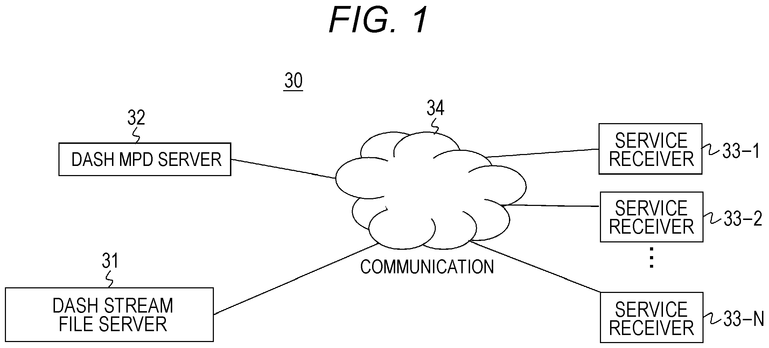

Fig. 1 illustrates a configuration example of an MPEG-DASH-based stream distribution system 30. In this configuration example, a media stream and a media presentation description (MPD) file are transmitted through a communication network transmission path (communication transmission path). The stream distribution system 30 includes a DASH stream file server 31 and a DASH MPD server 32, and N service receivers 33-1, 33-2,..., 33-N connected to the aforementioned servers 31 and 32 via a content delivery network (CDN) 34.

The DASH stream file server 31 generates a stream segment in a DASH specification (hereinafter, appropriately referred to as a "DASH segment") on the basis of predetermined content media data (video data, audio data, subtitle data, and the like) and sends a segment in response to an HTTP request from the service receiver. The DASH stream file server 31 may be a server dedicated to streaming or may also be used as a web server.

Furthermore, the DASH stream file server 31 transmits a segment of a predetermined stream to a requestor receiver via the CDN 34, corresponding to a request of the segment of the stream sent from the service receiver 33 (33-1, 33-2,..., or 33-N) via the CDN 34. In this case, the service receiver 33 refers to a value of a rate described in a media presentation description (MPD) file, selects a stream having an optimal rate according to a state of a network environment where the client is located, and sends a request.

The DASH MPD server 32 is a server that generates an MPD file for acquiring a DASH segment generated in the DASH stream file server 31. The DASH MPD server 32 generates the MPD file on the basis of content metadata from a content management server (not illustrated) and a segment address (url) generated in the DASH stream file server 31. Note that the DASH stream file server 31 and the DASH MPD server 32 may be physically the same.

In an MPD format, each attribute is described using an element called representation (Representation) for each stream such as video or audio. For example, in the MPD file, the representation is divided and respective rates are described for a plurality of video data streams having different rates. The service receiver 33 can select an optimal stream according to the state of the network environment where the service receiver 33 is placed, as described above, with reference to the value of the rate.

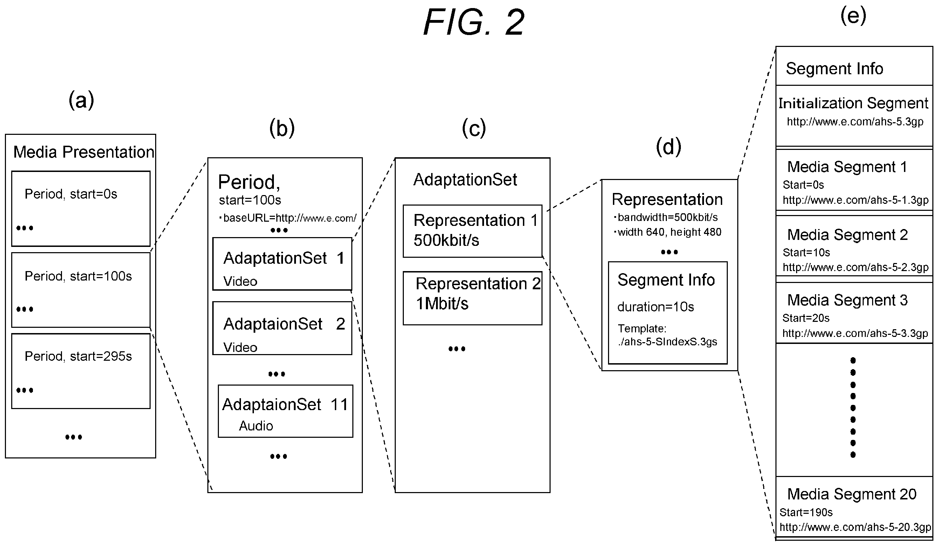

Fig. 2 illustrates an example of a relationship among structures hierarchically arranged in the MPD file. As illustrated in Fig. 2(a), a plurality of periods (Periods) separated by time intervals is present in a media presentation (Media Presentation) as the whole MPD file. For example, the first period starts at 0 seconds, the next period starts at 100 seconds, and so on.

As illustrated in Fig. 2(b), a plurality of adaptation sets (AdaptationSets) is present in a period. Each adaptation set depends on a difference in media type such as video or audio, a difference in language even if the media type is the same, a difference in viewpoint, or the like. As illustrated in Fig. 2(c), a plurality of representations (Representations) is present in an adaptation set. Each representation depends on a stream attribute such as a difference in rate, for example.

As illustrated in Fig. 2(d), a representation includes segment info (SegmentInfo). As illustrated in Fig. 2(e), in the segment info, an initialization segment (Initialization Segment) and a plurality of media segments (Media Segments) in which information for each segment (Segment) obtained by further separating a period is described are present. In the media segment, information of an address (url) for actually acquiring segment data such as video and audio, and the like present.

Note that the stream can be freely switched among a plurality of representations included in an adaptation set. As a result, a stream having an optimal rate can be selected according to the state of the network environment on the receiving side, and continuous video distribution can be performed.

### [Configuration Example of Transmission/Reception System]

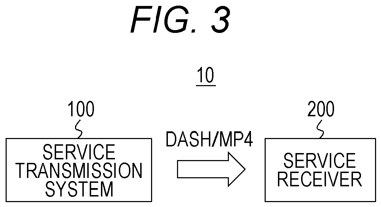

Fig. 3 illustrates a configuration example of a transmission/reception system 10 as an embodiment. The transmission/reception system 10 includes a service transmission system 100 and a service receiver 200. In the transmission/reception system 10, the service transmission system 100 corresponds to the DASH stream file server 31 and the DASH MPD server 32 of the stream distribution system 30 illustrated in Fig. 1. Furthermore, in the transmission/reception system 10, the service receiver 200 corresponds to the service receiver 33 (33-1, 33-2,..., or 33-N) of the stream distribution system 30 illustrated in Fig. 1.

The service transmission system 100 transmits DASH/MP4, that is, an MP4 (ISOBMFF) stream including an MPD file as a metafile and a media stream (media segment) such as video and audio through the communication network transmission path (see Fig. 1).

The MP4 stream includes a coded stream obtained by encoding image data of a wide viewing angle image, that is, a coded stream (coded image data) corresponding to each divided region (partition) obtained by dividing the wide viewing angle image in this embodiment. Here, the wide viewing angle image is, but not limited to, a projection picture (Projection picture) obtained by cutting out part or all of a spherical captured image and performing plane packing for the cutout spherical captured image.

Rendering meta information is inserted in a layer of the coded stream and/or a container. The rendering meta information is inserted in a layer of a video stream, so that the rendering meta information can be dynamically changed regardless of the type of the container. The rendering meta information includes information of a predetermined number of viewpoints registered in groups, and thus information of a predetermined number of grouped viewpoint grids. A viewpoint indicates a center position of a display image, and a registered viewpoint is referred to as a "viewpoint grid". Here, the information on the viewpoint grid includes information of an azimuth angle (azimuth information) and an elevation angle (elevation information).

Note that it is also conceivable to transmit all of coded streams each corresponding to each divided region of the wide viewing angle image. However, in the present embodiment, a coded stream corresponding to a requested divided region is transmitted. Therefore, it is possible to prevent a transmission band from being unnecessarily widened and to efficiently use the transmission band.

In the MPD file, identification information indicating that the rendering meta information is inserted in the layer of the container and/or the video stream, backward compatibility information, and further format type information of the projection picture are inserted.

The service receiver 200 receives the above-described MP4 (ISOBMFF) stream sent from the service transmission system 100 via the communication network transmission path (see Fig. 1). The service receiver 200 acquires, from the MPD file, meta information regarding the coded stream corresponding to each divided region of the wide viewing angle image.

The service receiver 200 requests the service transmission system (distribution server) 100 to transmit a predetermined number of coded streams corresponding to display regions, for example, receives and decodes the predetermined number of coded streams to obtain the image data of the display regions, and displays an image. When receiving the predetermined number of coded streams, the service receiver 200 also receives the rendering meta information. As described above, the rendering meta information includes the information of grouped viewpoint grids.

The service receiver 200 processes the image data of the wide viewing angle image obtained by decoding the predetermined number of coded streams on the basis of the rendering meta information to obtain display image data. For example, the service receiver 200 obtains the display image data having a predetermined viewpoint grid selected by a user operation unit as the center position, of a predetermined number of viewpoint grids of a group determined according to an attribute of a user or contract content.

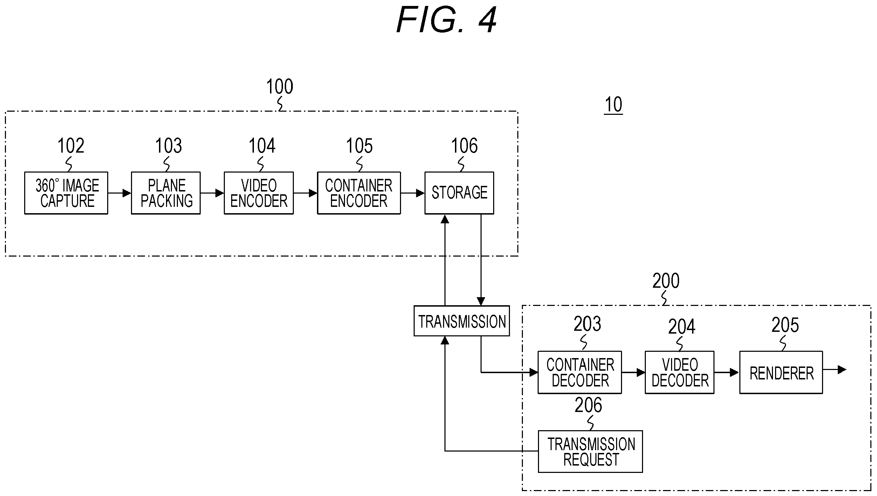

Fig. 4 schematically illustrates a configuration example of a whole system of the transmission/reception system 10. The service transmission system 100 includes a 360° image capture unit 102, a plane packing unit 103, a video encoder 104, a container encoder 105, and a storage 106.

The 360° image capture unit 102 images an object using a predetermined number of cameras to obtain image data of a wide viewing angle image, that is, image data of a spherical captured image (360° VR image) in the present embodiment. For example, the 360° image capture unit 102 obtains a front image and a rear image having an ultra wide viewing angle that is a viewing angle of 180° or higher, which are a spherical captured image or part of the spherical captured image captured by a fisheye lens.

The plane packing unit 103 cuts out part or all of the spherical captured image obtained in the 360° image capture unit 102 and performs plane packing for the cutout spherical captured image to obtain a projection picture (Projection picture). In this case, as a format type of the projection picture, for example, equirectangular (Equirectangular), cross-cubic (Cross-cubic), or the like is selected. Note that the plane packing unit 103 applies scaling to the projection picture as necessary to obtain the projection picture having a predetermined resolution.

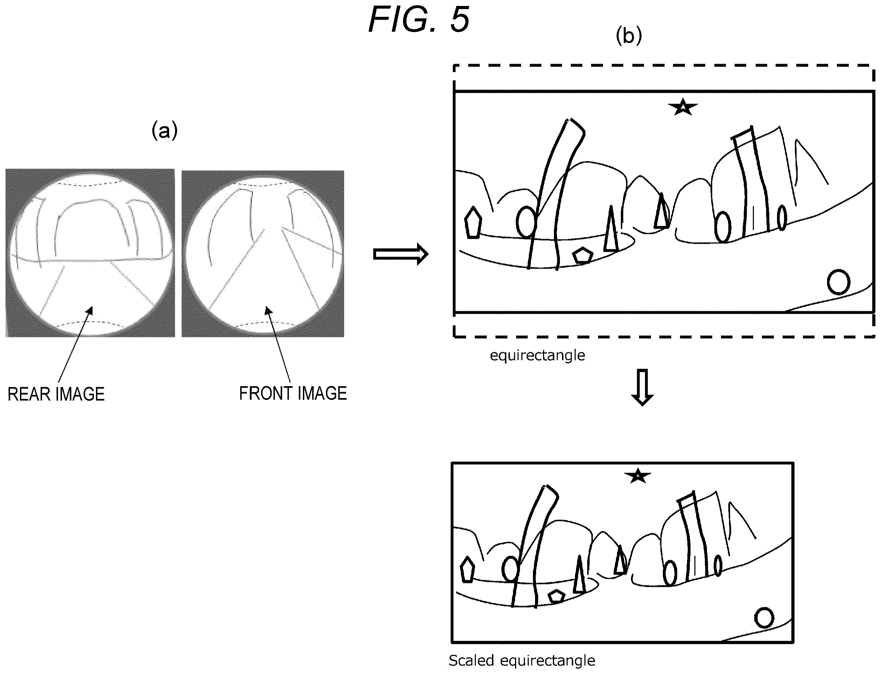

Fig. 5(a) illustrates an example of the front image and the rear image having an ultra wide viewing angle as the spherical captured image obtained using the camera 102. Fig. 5(b) illustrates an example of the projection picture obtained in the plane packing unit 103. This example is an example of a case where the format type of the projection picture is equirectangular. Furthermore, this example is an example of a case where the image is cut out at the latitude indicated by the broken lines in each image illustrated in Fig. 5(a). Fig. 5(c) illustrates an example of the projection picture after scaling.

Returning to Fig. 4, the video encoder 104 applies encoding such as MPEG4-AVC or HEVC to the image data of the projection picture from the plane packing unit 103, for example, to obtain the coded image data, and generates a video stream including the coded image data. Cutout position information is inserted in an SPS NAL unit of the video stream. For example, "conformance_window" corresponds to HEVC encoding, and "frame_crop_offset" corresponds to MPEG4-AVC encoding.

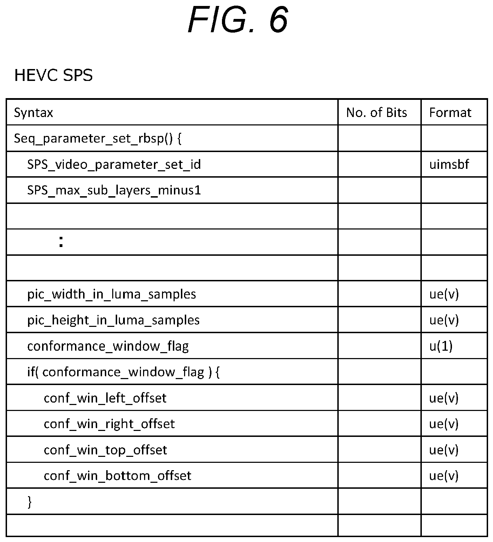

Fig. 6 illustrates a structure example (Syntax) of the SPS NAL unit in the HEVC encoding. The field of "pic_width_in_luma_samples" indicates a horizontal resolution (pixel size) of the projection picture. The field of "pic_height_in_luma_samples" indicates a vertical resolution (pixel size) of the projection picture. Then, when the "conformance_window_flag" is set, the cutout position information is present. The cutout position information is offset information having upper left of the projection picture as a base point (0, 0) .

The field of "conf_win_left_offset" indicates a left end position of a cutout position. The field of "conf_win_right_offset" indicates a right end position of the cutout position. The field of "conf_win_top_offset" indicates an upper end position of the cutout position. The field of "conf_win_bottom_offset" indicates a lower end position of the cutout position.

In the present embodiment, a center of the cutout position indicated by the cutout position information is made coincident with a reference point of the projection picture. Here, p and q are respectively expressed by the following expressions, where the center of the cutout position is O (p, q).

```
        p = (conf_win_right_offset -
 conf_win_left_offset)*1/2
        + conf_win_left_offset
        q = (conf_win_bottom_offset -
 conf_win_top_offset)*1/2
        + conf_win_top_offset
```

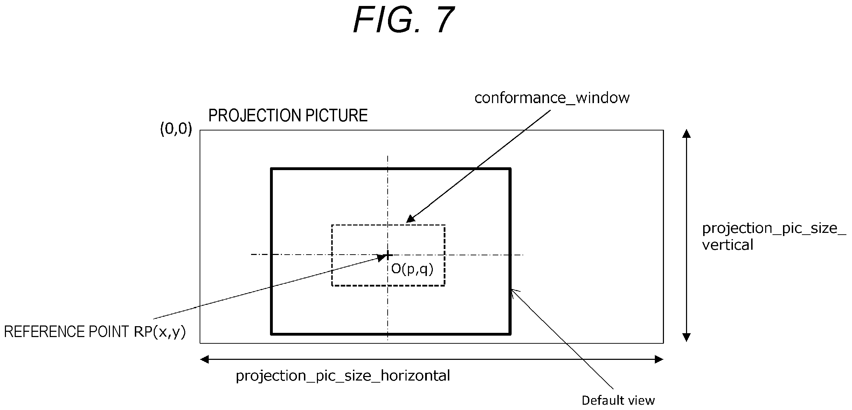

Fig. 7 illustrates that the center O (p, q) of the cutout position is made coincident with a reference point RP (x, y) of the projection picture. In the illustrated example, "projection_pic_size_horizontal" indicates a horizontal pixel size of the projection picture, and "projection_pic_size_vertical" indicates a vertical pixel size of the projection picture. Note that a VR-compatible terminal can render a projection picture to obtain a display view (display image), but a default view is centered on the reference point RP (x, y).

In this case, for example, when the projection picture includes a plurality of regions including a default region centered on the reference point RP (x, y), the position indicated by the cutout position information is set to coincide with the position of the default region. Is done. In this case, the center O (p, q) of the cutout position indicated by the cutout position information coincides with the reference point RP (x, y) of the projection picture.

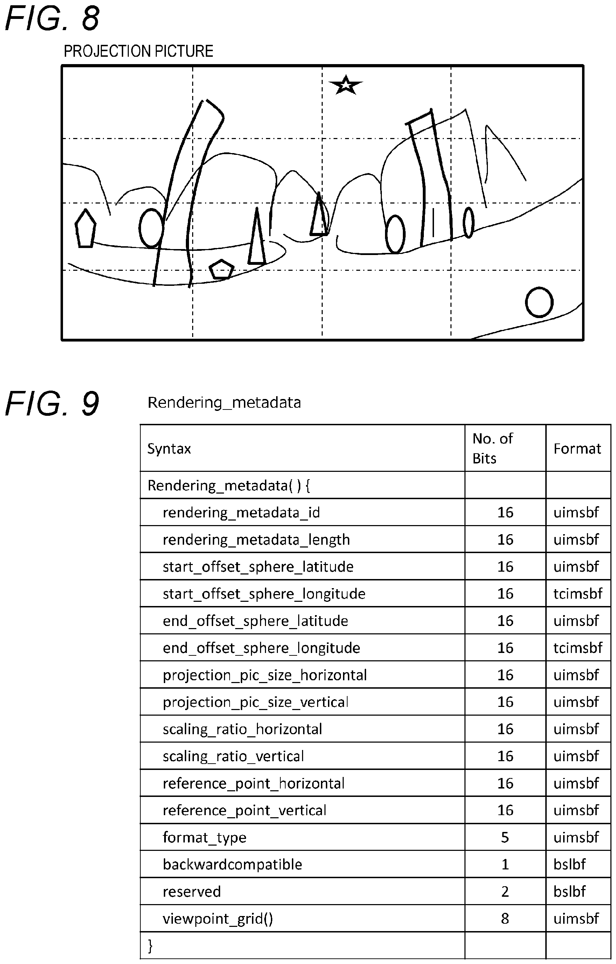

Returning to Fig. 4, the video encoder 104 divides the projection picture into a plurality of partitions (divided regions) to obtain a coded stream corresponding to each partition. Fig. 8 illustrates a division example in a case where the format type of the projection picture is equirectangular.

The video encoder 104 individually encodes each partition, collectively encodes the whole projection picture, or performs encoding using a tile function using each partition as a tile, for example, in order to obtain the coded stream corresponding to each partition of the projection picture. Thereby, the reception side can independently decode the coded stream corresponding to each partition.

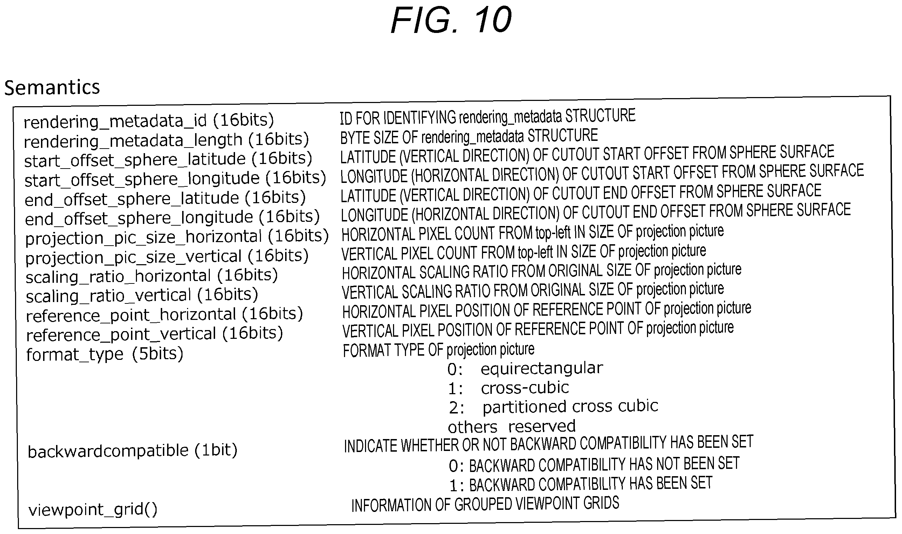

The video encoder 104 inserts an SEI message (SEI message) having rendering metadata (rendering meta information) into an "SEIs" portion of an access unit (AU). Fig. 9 illustrates a structure example (Syntax) of the rendering metadata (Rendering_metadata). Fig. 10 illustrates content (Semantics) of main information in the structural example.

The 16-bit field of "rendering_metadata_id" is an ID for identifying a rendering metadata structure. The 16-bit field of "rendering_metadata_length" indicates a byte size of the rendering metadata structure.

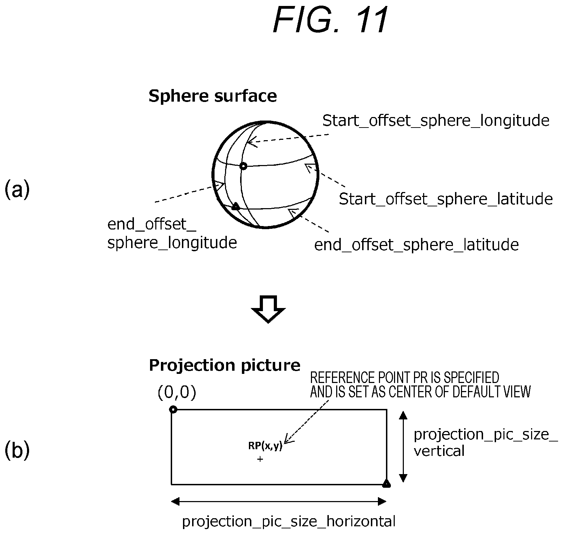

Each of the 16-bit fields of "start_offset_sphere_latitude", "start_offset_sphere_longitude", "end_offset_sphere_latitude", and "end_offset_sphere_longitude" indicates information of a cutout range in a case of performing the plane packing for the spherical captured image (see Fig. 11(a)). The field of "start_offset_sphere_latitude" indicates a latitude (vertical direction) of a cutout start offset from a spherical surface. The field of "start_offset_sphere_longitude" indicates a longitude (horizontal direction) of the cutout start offset from the spherical surface. The field of "end_offset_sphere_latitude" indicates a latitude (vertical direction) of a cutout end offset from the spherical surface. The field of "end_offset_sphere_longitude" indicates a longitude (horizontal direction) of the cutout end offset from the spherical surface.

Each of the 16-bit fields of "projection_pic_size_horizontal" and "projection_pic_size_vertical" indicates size information of the projection picture (projection picture) (see Fig. 11(b)). The field of "projection_pic_size_horizontal" indicates a horizontal pixel count from top left (top-left) in the size of the projection picture. The field of "projection_pic_size_vertical" indicates a vertical pixel count from the top left (top-left) in the size of the projection picture.

Each of the 16-bit fields of "scaling_ratio_horizontal" and "scaling_ratio_vertical" indicates a scaling ratio from the original size of the projection picture (see Figs. 5(b) and 5(c)). The field of "scaling_ratio_horizontal" indicates a horizontal scaling ratio from the original size of the projection picture. The field of "scaling_ratio_vertical" indicates a vertical scaling ratio from the original size of the projection picture.

Each of the 16-bit fields of "reference_point_horizontal" and "reference_point_vertical" indicates position information of the reference point RP (x, y) of the projection picture (see Fig. 11(b)). The field of "reference_point_horizontal" indicates a horizontal pixel position "x" of the reference point RP (x, y). The field of "reference_point_vertical" indicates a vertical pixel position "y" of the reference point RP (x, y).

The 5-bit field of "format_type" indicates the format type of the projection picture. For example, "0" indicates equirectangular (Equirectangular), "1" indicates cross-cubic (Cross-cubic), and "2" indicates partitioned cross cubic (partitioned cross cubic).

The 1-bit field of "backwardcompatible" indicates whether or not backward compatibility has been set, that is, whether or not the center O (p, q) at the cutout position indicated by the cutout position information and inserted in a layer of a video stream has been set to coincide with the reference point RP (x, y) of the projection picture (see Fig. 7). For example, "0" indicates that the backward compatibility has not been set, and "1" indicates that the backward compatibility has been set. "viewpoint_grid ()" is a field for storing the information of the grouped viewpoint grids.

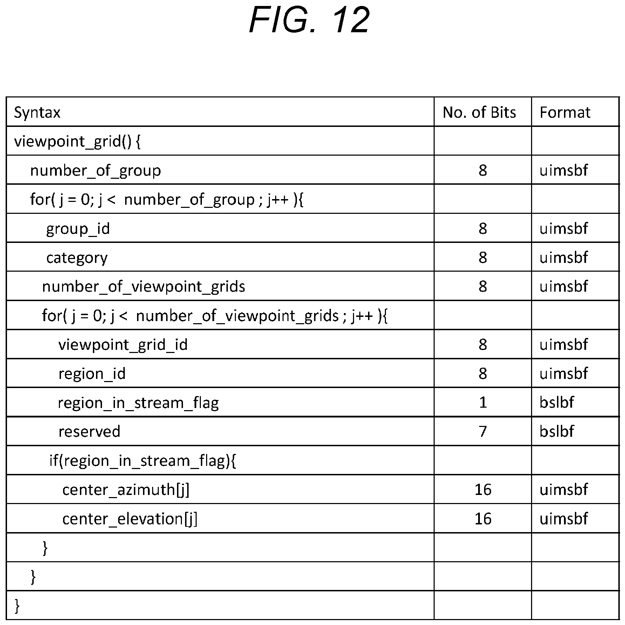

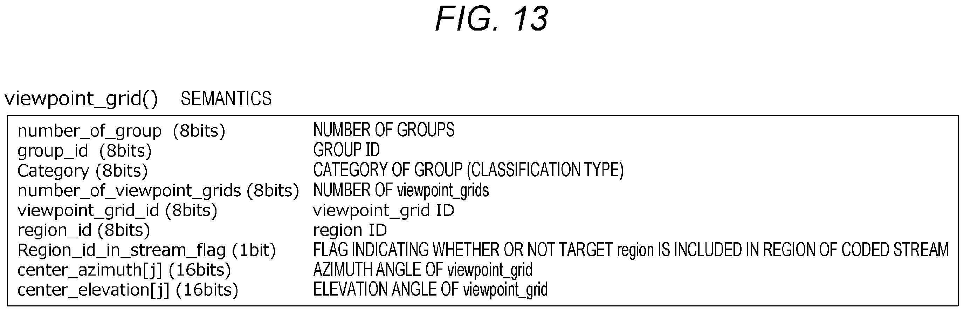

Fig. 12 illustrates a structure example (Syntax) of "viewpoint_grid ()". Fig. 13 illustrates content (Semantics) of main information in the structural example. The 8-bit field of "number_of_group" indicates the number of groups. The following fields are repeated by this number. The 8-bit field of "group_id" indicates a group ID. The 8-bit field of "category" indicates a category (classification type) of a group.

The 8-bit field of "number_of_viewpoint_grids" indicates the number of viewpoint grids (viewpoint_grids). The following fields are repeated by this number. The 8-bit field of "viewpoint_grid_id" indicates an ID of a viewpoint grid. The 8-bit field of "region_id" indicates an ID of a region where the viewpoint grid is present. The 1-bit field of "region_in_stream_flag" indicates whether or not a target region is included in the coded stream. For example, "1" indicates that the target region is included, and "0" indicates that the target region is not included.

When "region_in_stream_flag" is "1", that is, when the target region is included in the coded stream, the following field indicating position information of the viewpoint grid is present. The 16-bit field of "center_azimuth [j]" indicates an azimuth angle (azimuth information) of the viewpoint grid. The 16-bit field of "center_elevation [j]" indicates an elevation angle (elevation information) of the viewpoint grid.

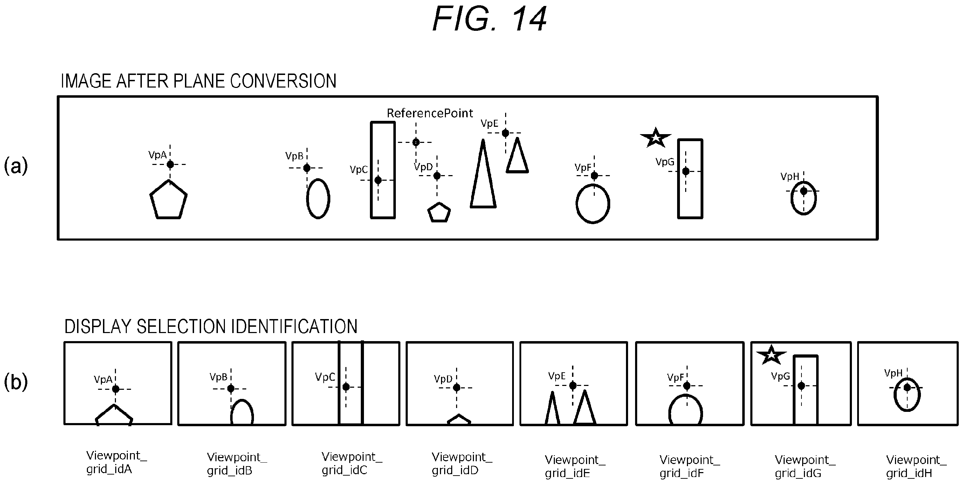

Here, the viewpoint grid will be described. Fig. 14(a) illustrates an image after plane conversion. This image is enclosed by a horizontally long rectangle and is obtained by applying conversion processing to the above-described projection picture (see Fig. 8) so that a distorted portion becomes a proper image.

In the illustrated example, eight viewpoints VpA to VpH are registered as viewpoint grids in the image after plane conversion (wide viewing angle image). Note that the above description has been made such that the position of each viewpoint grid is specified using the azimuth angle (azimuth information) and the elevation angle (elevation information). However, the position (coordinate value) of each viewpoint grid can be expressed by a pixel offset from the reference point RP (x, y) (see Fig. 9). The reception side can select a desired viewpoint grid from the viewpoint grids identified with the viewpoint grid IDs A to H, thereby displaying an image having the selected viewpoint grid as the center position, as illustrated in Fig. 14(b).

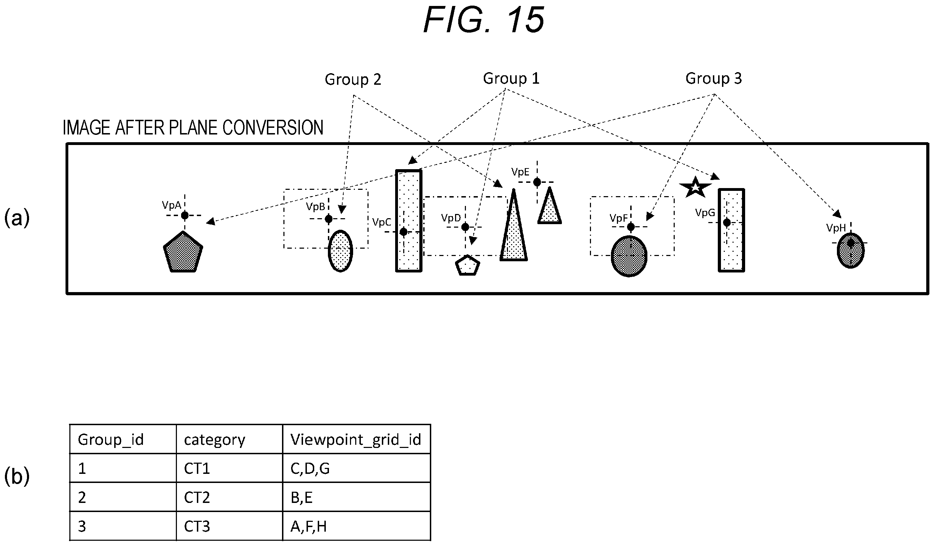

Fig. 15(a) illustrates an example of grouping by viewpoint grid category. In the illustrated example, group 1 includes three viewpoint grids of VpC, VpD, and VpG. Furthermore, group 2 includes two viewpoint grids of VpB and VpE. Furthermore, group 3 includes three viewpoint grids of VpA, VpF, and VpH. Fig. 15(b) illustrates a list of categories and the viewpoint grid IDs bound by the group IDs in the example in Fig. 15(a).

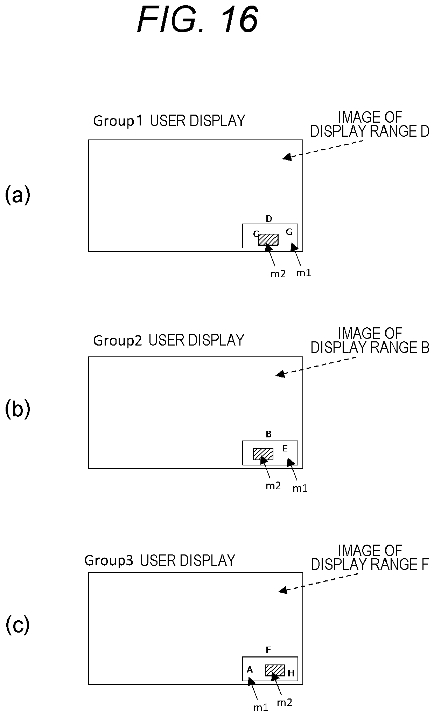

Fig. 16(a) illustrates an example of user display of the group 1. Here, the user of the group 1 refers to a user allowed to use the viewpoint grid included in the group 1 according to the attribute of the user or the contract content, as described below. This similarly applies to the users of the other groups. This similarly applies to other examples.

The illustrated example illustrates a state in which the viewpoint grid of VpD is selected by a user operation, and illustrates an image having the viewpoint grid of VpD as the center position (an image in a display range D, see the dashed-dotted line frame corresponding to VpD in Fig. 15(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "D" is displayed, and "C" and "G" indicating IDs of selectable viewpoint grids are further displayed at corresponding positions within the rectangular region m1.

Fig. 16(b) illustrates an example of user display of the group 2. The illustrated example illustrates a state in which the viewpoint grid of VpB is selected by a user operation, and illustrates an image having the viewpoint grid of VpB as the center position (an image in a display range B, see the dashed-dotted line frame corresponding to VpB in Fig. 15(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "B" is displayed, and "E" indicating an ID of a selectable viewpoint grid is further displayed at a corresponding position within the rectangular region m1.

Fig. 16(c) illustrates an example of user display of the group 3. The illustrated example illustrates a state in which the viewpoint grid of VpF is selected by a user operation, and illustrates an image having the viewpoint grid of VpF at the center position (an image in a display range F, see the dashed-dotted line frame corresponding to VpF in Fig. 15(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "F" is displayed, and "A" and "H" indicating IDs of selectable viewpoint grids are further displayed at corresponding positions within the rectangular region m1.

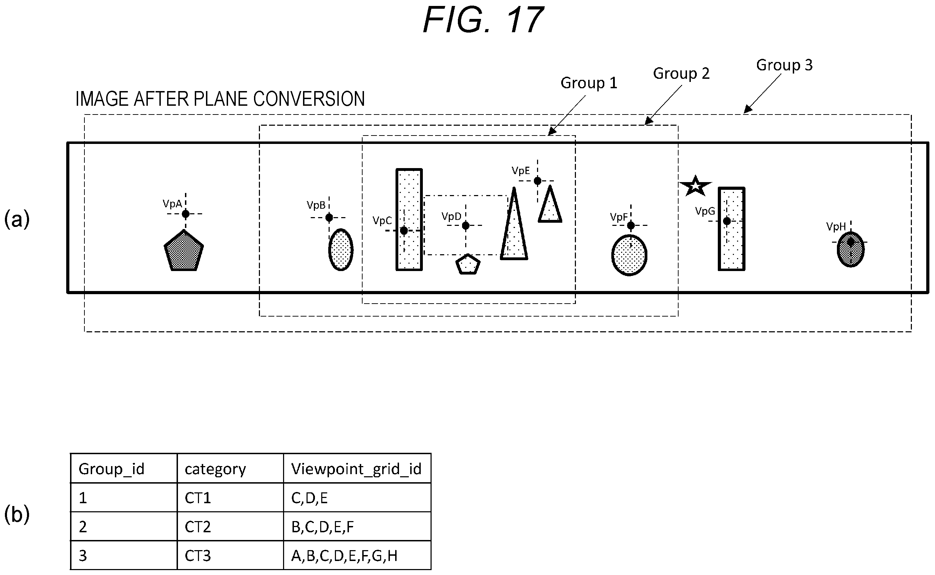

Fig. 17(a) illustrates an example of grouping displayable image ranges of the viewpoint grids. In the illustrated example, group 1 includes three viewpoint grids of VpC, VpD, and VpE. Furthermore, group 2 includes five viewpoint grids of VpB, VpC, VpD, VpE, and VpF. Furthermore, group 3 includes eight viewpoint grids VpA, VpB, VpC, VpD, VpE, VpF, VpG, and VpH. Fig. 17(b) illustrates a list of categories and the viewpoint grid IDs bound by the group IDs in the example in Fig. 17(a).

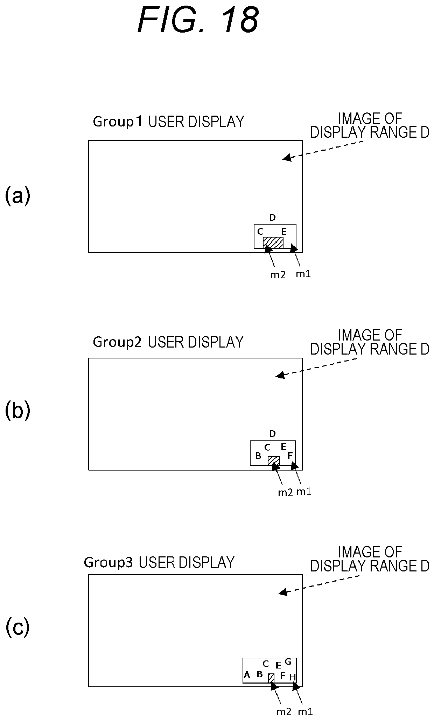

Fig. 18(a) illustrates an example of user display of the group 1. The illustrated example illustrates a state in which the viewpoint grid of VpD is selected by a user operation, and illustrates an image having the viewpoint grid of VpD as the center position (an image in a display range D, see the dashed-dotted line frame corresponding to VpD in Fig. 17(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "D" is displayed, and "C" and "E" indicating IDs of selectable viewpoint grids are further displayed at corresponding positions within the rectangular region m1.

Fig. 18(b) illustrates an example of user display of the group 2. The illustrated example illustrates a state in which the viewpoint grid of VpD is selected by a user operation, and illustrates an image having the viewpoint grid of VpD as the center position (an image in a display range D, see the dashed-dotted line frame corresponding to VpD in Fig. 17(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "D" is displayed, and "B", "C", "E", and "F" indicating IDs of selectable viewpoint grids are further displayed at corresponding positions within the rectangular region m1.

Fig. 18(c) illustrates an example of user display of the group 3. The illustrated example illustrates a state in which the viewpoint grid of VpD is selected by a user operation, and illustrates an image having the viewpoint grid of VpD as the center position (an image in a display range D, see the dashed-dotted line frame corresponding to VpD in Fig. 17(a)), as the main image. Then, in the illustrated example, a UI image is displayed at a lower right position in a form of being superimposed on the main image. In the UI image, a rectangular region m1 indicating a range of the whole image is illustrated, and a rectangular region m2 indicating a current display range is illustrated within the rectangular region m1. Furthermore, in the UI image, the ID of the viewpoint grid corresponding to the current display range being "D" is displayed, and "A", "B", "C", "E", "F", "G", and "H" indicating IDs of selectable viewpoint grids are further displayed at corresponding positions within the rectangular region m1.

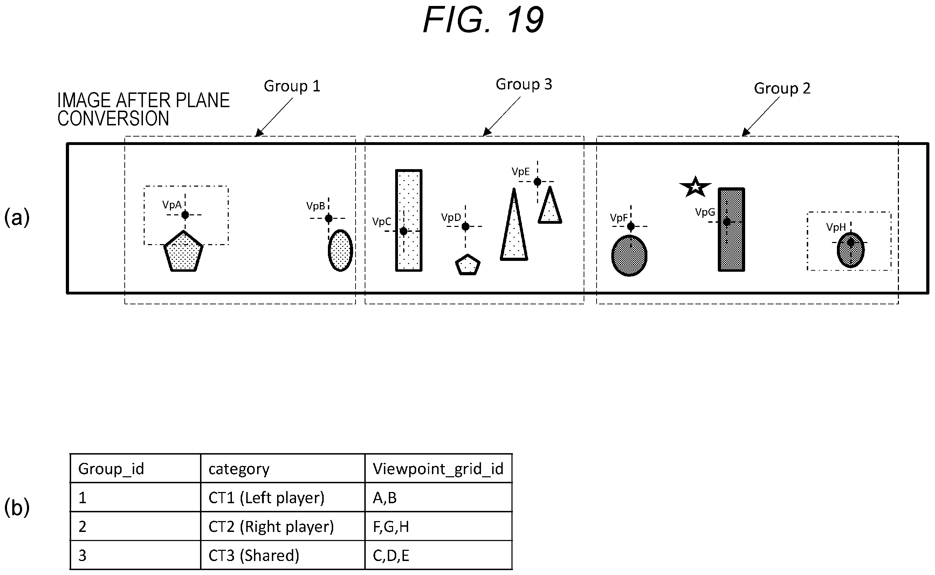

Fig. 19(a) illustrates still another example of grouping by dividing a displayable image by category of the viewpoint grid. In the illustrated example, the category of group 1 is "Left Player", and the group 1 includes two viewpoint grids of VpA and VpB. Furthermore, the category of group 2 is "Right Player", and the group 2 includes three viewpoint grids of VpF, VpG, and VpH. Furthermore, the category of group 3 is "Shared", and the group 3 includes three viewpoint grids of VpC, VpD, and VpE. The viewpoint grids included in the group 3 can be selected by both the user of the group 1 and the user of the group 2. Fig. 19(b) illustrates a list of categories and the viewpoint grid IDs bound by the group IDs in the example in Fig. 19(a).

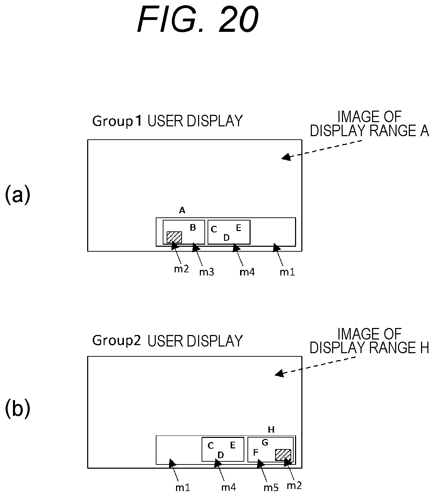

Fig. 20(a) illustrates an example of user display of the group 1. The illustrated example illustrates a state in which the viewpoint grid of VpA is selected by a user operation, and illustrates an image having the viewpoint grid of VpA as the center position (an image in a display range A, see the dashed-dotted line frame corresponding to VpA in Fig. 19(a)), as the main image. Then, in the illustrated example, a UI image is displayed at a position from a lower center to a lower right in a form of being superimposed on the main image. In the UI image, a rectangular region m1 indicating a range of the whole image is illustrated, a rectangular region m3 indicating an image range of the group 1 and a rectangular region m4 indicating an image range of the group 3 are illustrated within the rectangular region m1, and a rectangular region m2 indicating a current display range is illustrated within the rectangular region m3. Furthermore, in the UI image, the ID of the viewpoint grid corresponding to the current display range being "A" is displayed, and "B", "C", "D", and "E" indicating IDs of selectable viewpoint grids are further displayed at corresponding positions within the rectangular regions m3 and m4.

Fig. 20(b) illustrates an example of user display of the group 2. The illustrated example illustrates a state in which the viewpoint grid of VpH is selected by a user operation, and illustrates an image having the viewpoint grid of VpH as the center position (an image in a display range A, see the dashed-dotted line frame corresponding to VpH in Fig. 19(a)), as the main image. Then, in the illustrated example, a UI image is displayed at a position from a lower center to a lower right in a form of being superimposed on the main image. In the UI image, a rectangular region m1 indicating a range of the whole image is illustrated, a rectangular region m5 indicating an image range of the group 2 and a rectangular region m4 indicating an image range of the group 3 are illustrated within the rectangular region m1, and a rectangular region m2 indicating a current display range is illustrated within the rectangular region m5. Furthermore, in the UI image, the ID of the viewpoint grid corresponding to the current display range being "H" is displayed, and "C", "D", "E", "F", and "G" indicating IDs of selectable viewpoint grids are further displayed at corresponding positions within the rectangular regions m5 and m4.

Returning to Fig. 4, the container encoder 105 generates a container including the coded stream generated in the video encoder 104, here, an MP4 stream, as a distribution stream. In this case, the container encoder 105 inserts the rendering metadata (see Fig. 9) into a layer of the container. Note that, in the present embodiment, the rendering metadata is inserted in both the layer of the video stream (coded stream) and the layer of the container. It is also conceivable to insert the rendering metadata into only one of the layers. The MP4 distribution stream obtained by the container encoder 105 as described above is transmitted to the service receiver 200 via the storage 106.

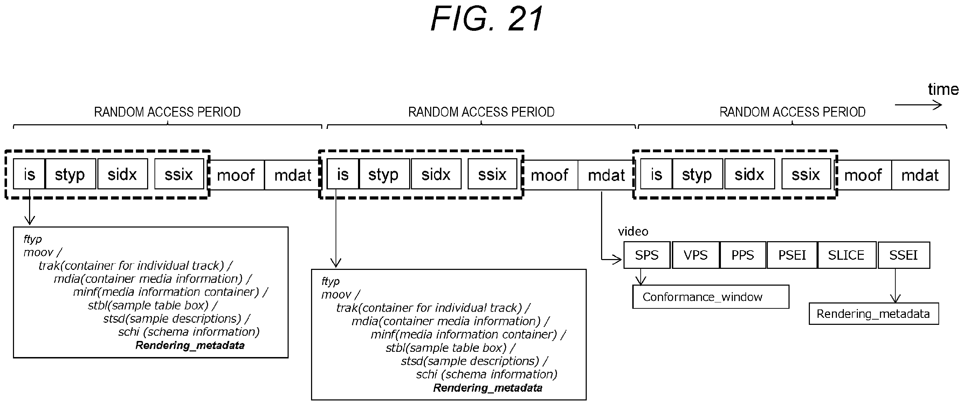

Fig. 21 illustrates an example of the MP4 stream as the distribution stream. The whole service stream is fragmented and transmitted so that image and sound are output during transmission, such as in general broadcasting. Each random access period has a configuration starting with an initialization segment (IS) followed by boxes of "styp", "sidx (Segment index box)", "ssix (Sub-segment index box)", "moof (Movie fragment box)" and "mdat (Media data box)".

The initialization segment (IS) has a box (Box) structure based on an ISO base media file format (ISOBMFF). A "ftyp" box indicating the file type (File type) is arranged in the head, followed by a "moov" box for control. Although detailed description is omitted, a "trak" box, a "mdia" box, a "minf" box, a "stbl" box, a "stsd" box, and a "schi" box are hierarchically arranged in the "moov" box, and the rendering metadata (Rendering_metadata) (see Fig. 9) is inserted in the "schi" box.

The "styp" box includes segment type information. The "sidx" box includes range information of each track (track), indicates the position of "moof"/"mdat", and also indicates the position of each sample (picture) in "mdat". The "ssix" box includes classification information of tracks, and classification of I/P/B types is performed.

The "moof" box includes control information. The "mdat" box contains entity itself of a signal (transmission medium) such as video or audio. The "moof" box and the "mdat" box constitute a movie fragment (Movie fragment). Since a fragment obtained by fragmenting (fragmenting) the transmission medium is included in the "mdat" box of one movie fragment, the control information included in the "moof" box is control information regarding the fragment.

In the "mdat" box of each movie fragment, a predetermined number of pictures, for example, one GOP of coded image data (access units) of the projection picture are arranged. Here, each access unit includes NAL units such as "VPS", "SPS", "PPS", "PSEI", "SLICE", and "SSEI". Note that "VPS" and "SPS" are inserted in, for example, the first picture of the GOP.

Information of "conformance_window" as the cutout position information is inserted in the SPS NAL unit (see Fig. 6). Furthermore, an SEI message having rendering metadata (Rendering_metadata) (see Fig. 9) is inserted as a NAL unit of "SSEI".

In the present embodiment, the container encoder 105 generates a plurality of MP4 streams each including a coded stream corresponding to each partition. In the case of performing encoding using the tile function using each partition as a tile, one MP4 stream including coded streams corresponding to all the partitions as substreams can be also generated. However, in the present embodiment, it is assumed that a plurality of MP4 streams each including a coded stream corresponding to each partition is generated.

Note that, in the case of performing encoding using the tile function using each partition as a tile, the container encoder 105 generates an MP4 stream (base container) of a base (base) including a parameter set such as SPS in addition to the plurality of MP4 streams each including a coded stream corresponding to each partition.

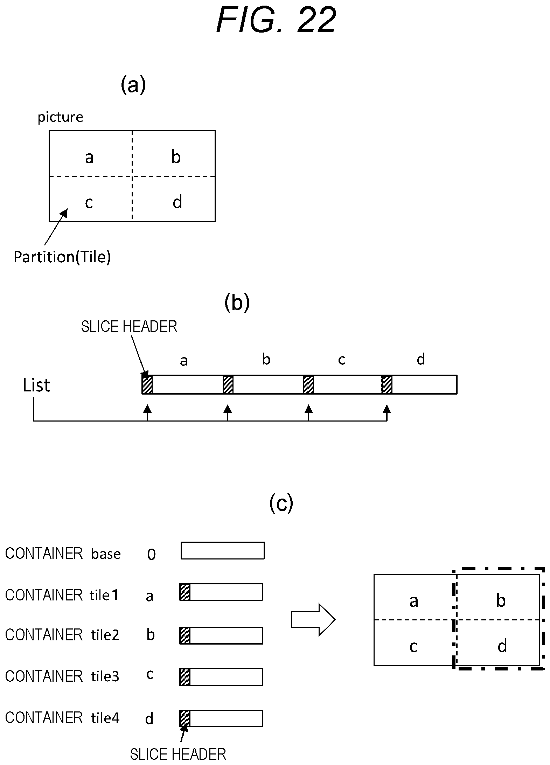

Here, the encoding using the tile function using each partition as a tile will be described with reference to Fig. 22. Tiles can be obtained by dividing a picture in horizontal and vertical directions and can be independently encoded/decoded. In the tile, intra prediction, loop filter, and entropy coding in the picture can be refreshed, and thus each of regions divided as the tiles can be independently encoded and decoded.

Fig. 22(a) illustrates an example of a case of dividing a picture into a total of four parts including two parts in the vertical direction and two parts in the horizontal direction, and performing encoding using each partition as a tile. In this case, as illustrated in Fig. 22(b), regarding partitions (tiles) a, b, c, and d divided into tiles, a list of byte positions of first data of each tile is described in a slice header, so that independent decoding becomes possible.

Since a positional relationship among start blocks of the tiles in the picture can be recognized with relative positions from top left (top-left) of the picture, the original picture can be reconstructed on the reception side even in a case of container-transmitting the coded stream of each partition (tile) using another packet. For example, as illustrated in Fig. 22(c), when the coded streams of the partitions b and d surrounded by the dashed-dotted line rectangular frame are decoded, display of the partitions (tiles) b and d becomes possible.

Note that, in the case of container-transmitting the coded stream of each partition (tile) using another packet, the meta information such as the parameter set is stored in a tile-based MP4 stream (tile-based container). Then, the coded stream corresponding to each partition is stored as slice information in an MP4 stream (tile container) of the each partition.

Furthermore, the container encoder 105 inserts information of the number of pixels and a frame rate of the partition in a layer of the container. In the present embodiment, a partition descriptor (partition_descriptor) is inserted in the initialization segment (IS) of the MP4 stream. In this case, a plurality of partition descriptors may be inserted on a picture basis at the maximum frequency.

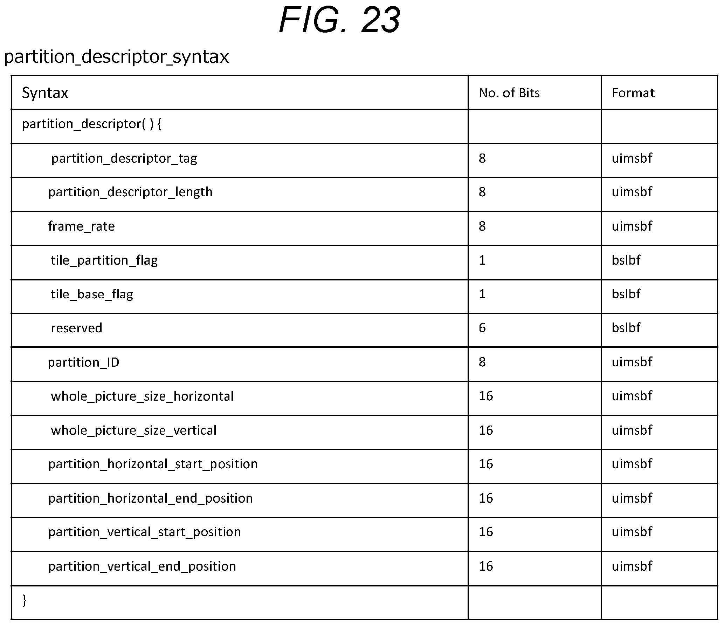

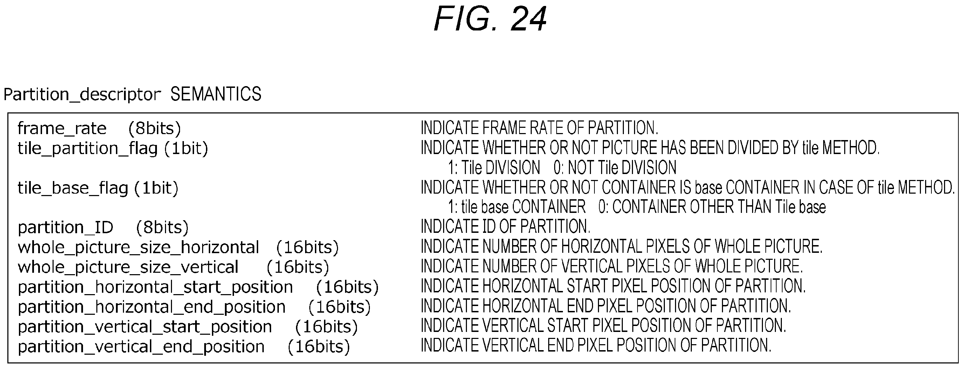

Fig. 23 illustrates a structural example (Syntax) of a partition descriptor. Furthermore, Fig. 24 illustrates content (Semantics) of main information in the structural example. The 8-bit field of "partition_descriptor_tag" indicates a descriptor type, which indicates here a partition descriptor. The 8-bit field of "partition_descriptor_length" indicates a length (size) of the descriptor and indicates the number of subsequent bytes as the length of the descriptor.

The 8-bit field of "frame_rate" indicates a frame rate (full frame rate) of a partition (divided picture). The 1-bit field of "tile_partition_flag" indicates whether or not the picture is divided by the tile method. For example, "1" indicates that the picture is divided by the tile method, and "0" indicates that the picture is not divided by the tile method. The 1-bit field of "tile_base_flag" indicates whether or not the container is a base container in the case of the tile method. For example, "1" indicates a base container, and "0" indicates a container other than the base container.

The 8-bit field of "partition_ID" indicates an ID of the partition. The 16-bit field of "whole_picture_size_horizontal" indicates the number of horizontal pixels of the whole picture. The 16-bit field of "whole_picture_size_vertical" indicates the number of vertical pixels of the whole picture.

The 16-bit field of "partition_horizontal_start_position" indicates a horizontal start pixel position of the partition. The 16-bit field of "partition_horizontal_end_position" indicates a horizontal end pixel position of the partition. The 16-bit field of "partition_vertical_start_position" indicates a vertical start pixel position of the partition. The 16-bit field "partition_vertical_end_position" indicates a vertical end pixel position of the partition. Each of these fields constitutes the position information of the partitions for the whole picture, and constitutes information of the number of pixels of the partitions.

Returning to Fig. 4, the storage 106 temporarily accumulates the MP4 streams of the partitions generated by the container encoder 105. Note that, in the case where the partitions are divided by the tile method, the storage 106 also accumulates the tile-based MP4 streams. An MP4 stream of a partition for which a transmission request has been made, of the MP4 streams accumulated as described above, is transmitted to the service receiver 200. Note that, note that, in the case where the partition is divided by the tile method, the base MP4 stream is also transmitted at the same time.

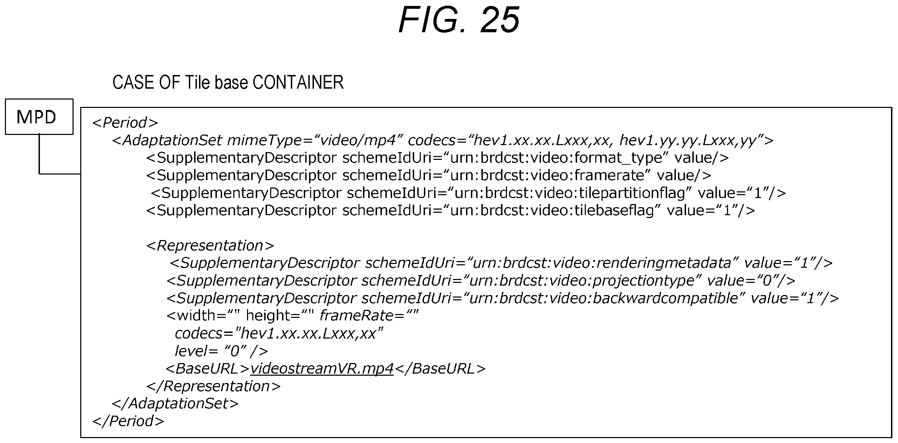

Fig. 25 illustrates a description example of an MPD file corresponding to a tile-based MP4 stream (tile-based container). In the MPD file, an adaptation set (AdaptationSet) corresponding to one MP4 stream (track) is present as a tile-based container.

In the adaptation set, the description of "<AdaptationSet mimeType="video/mp4" codecs="hev1.xx.xx.Lxxx,xx,hev1.yy.yy.Lxxx,yy">"" indicates the presence of an adaptation set (AdaptationSet) for a video stream, supply of the video stream as an MP4 file structure, and the presence of the HEVC-coded video stream (coded image data).

The description of "<SupplementaryDescriptor schemeIdUri="urn:brdcst:video:format_type" value/>" indicates the format type of the projection picture. The description of "<SupplementaryDescriptor schemeIdUri="urn:brdcst:video:framerate" value/>" indicates the frame rate of the picture.

The description of "<SupplementaryDescriptor schemeIdUri="urn:brdcst:video:tilepartitionflag" value="1"/>" indicates that the picture is divided by the tile method. The description of "<SupplementaryDescriptor schemeIdUri="urn:brdcst:video:tilebaseflag" value="1"/>" indicates that the container is the tile-based container.

Furthermore, in the adaptation set, a representation (Representation) corresponding to the video stream is present. In this representation, the description of "<SupplementaryDescriptor schemeIdUri="urn:brdcst:video:renderingmetadata" value="1"/>" indicates the presence of rendering metadata (Rendering_metadata).

Furthermore, the description of "<SupplementaryDescriptor schemeIdUri="urn:brdcst:video:projectiontype" value="0"/>" indicates that the format type of the projection picture is equirectangular (Equirectangular). The description of "<SupplementaryDescriptor schemeIdUri="urn:brdcst:video:backwardcompatible" value="1"/>" indicates that backward compatibility has been set, that is, the center O (p, q) at the cutout position indicated by the cutout position information and inserted in the layer of the video stream has been set to coincide with the reference point RP (x, y) of the projection picture.

Furthermore, in the representation, the description of "width = "" height = "" frameRate = """, "codecs = "hev1.xx.xx.Lxxx, xx"", and "level = "0"" indicates a resolution, a frame rate, and a codec type, and further a level "0" is provided as tag information. Furthermore, the description of "<BaseURL>videostreamVR.mp4</BaseURL>" indicates a location of the MP4 stream as "videostreamVR.mp4".

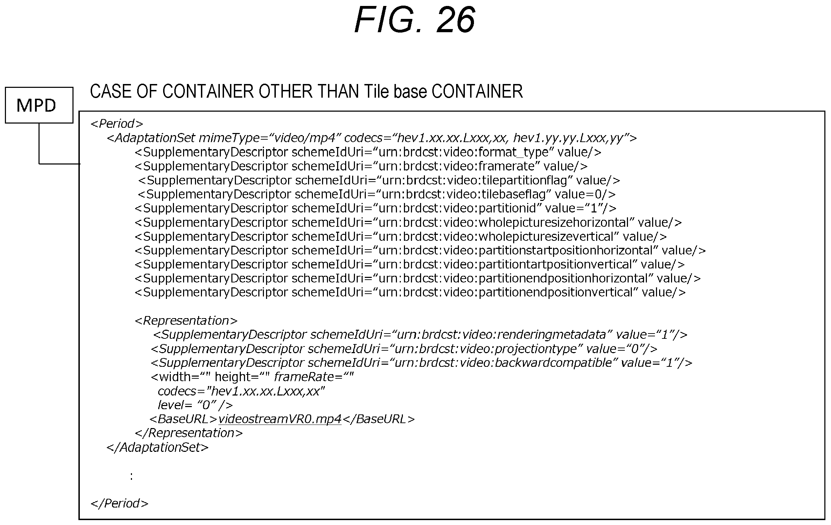

Fig. 26 illustrates a description example of an MPD file corresponding to an MP4 stream of each partition. In the MPD file, adaptation sets (AdaptationSets) respectively corresponding to a plurality of MP4 streams (tracks) are present. Note that, in the illustrated example, only one adaptation set (AdaptationSet) is illustrated for simplification of the drawing.

The one adaptation set will be described, and description of the other adaptation sets is omitted as they are similar. In the adaptation set, the description of "<AdaptationSet mimeType="video/mp4" codecs="hev1.xx.xx.Lxxx,xx,hev1.yy.yy.Lxxx,yy">" indicates the presence of an adaptation set (AdaptationSet) for a video stream, supply of the video stream as an MP4 file structure, and the presence of the HEVC-coded video stream (coded image data).

The description of "<SupplementaryDescriptor schemeIdUri="urn:brdcst:video:format_type" value/>" indicates the format type of the projection picture. The description of "<SupplementaryDescriptor schemeIdUri="urn:brdcst:video:framerate" value/>" indicates the frame rate (full frame rate) of the partition.

The description of "<SupplementaryDescriptor schemeIdUri="urn:brdcst:video:tilepartitionflag" value="1"/>" indicates whether or not the picture is divided by the tile method. The description of "<SupplementaryDescriptor schemeIdUri="urn:brdcst:video:tilebaseflag" value="0"/>" indicates that the container is a container other than the tile-based container. The description of "<SupplementaryDescriptor schemeIdUri="urn:brdcst:video:partitionid" value="1"/>" indicates that the partition ID is "1".

The description of "<SupplementaryDescriptor schemeIdUri="urn:brdcst:video:wholepicturesizehorizontal" value/>" indicates the number of horizontal pixels of the whole picture. The description of "<SupplementaryDescriptor schemeIdUri="urn:brdcst:video:wholepicturesizevertical" value/>" indicates the number of vertical pixels of the whole picture.

The description of "<SupplementaryDescriptor schemeIdUri="urn:brdcst:video:partitionstartpositionhoriz ontal" value/>" indicates the horizontal start pixel position of the partition. The description of "<SupplementaryDescriptor schemeIdUri="urn:brdcst:video:partitiontartpositionvertic al" value/>" indicates the horizontal end pixel position of the partition. The description of "<SupplementaryDescriptor schemeIdUri="urn:brdcst:video:partitionendpositionhorizon tal" value/>" indicates the vertical start pixel position of the partition. The description of "<SupplementaryDescriptor schemeIdUri="urn:brdcst:video:partitionendpositionvertica l" value/>" indicates the vertical end pixel position of the partition.

Furthermore, in the adaptation set, a representation (Representation) corresponding to the video stream is present. In this representation, the description of "<SupplementaryDescriptor schemeIdUri="urn:brdcst:video:renderingmetadata" value="1"/>" indicates the presence of rendering metadata (Rendering_metadata).

Furthermore, the description of "<SupplementaryDescriptor schemeIdUri="urn:brdcst:video:projectiontype" value="0"/>" indicates that the format type of the projection picture is equirectangular (Equirectangular). The description of "<SupplementaryDescriptor schemeIdUri="urn:brdcst:video:backwardcompatible" value="1"/>" indicates that backward compatibility has been set, that is, the center O (p, q) at the cutout position indicated by the cutout position information and inserted in the layer of the video stream has been set to coincide with the reference point RP (x, y) of the projection picture.

Furthermore, in the representation, the description of "width = "" height = "" frameRate = """, "codecs = "hev1.xx.xx.Lxxx, xx"", and "level = "0"" indicates a resolution, a frame rate, and a codec type, and further a level "0" is provided as tag information. Furthermore, the description of "<BaseURL>videostreamVR0.mp4</BaseURL>" indicates a location of the MP4 stream as "videostreamVR0.mp4".

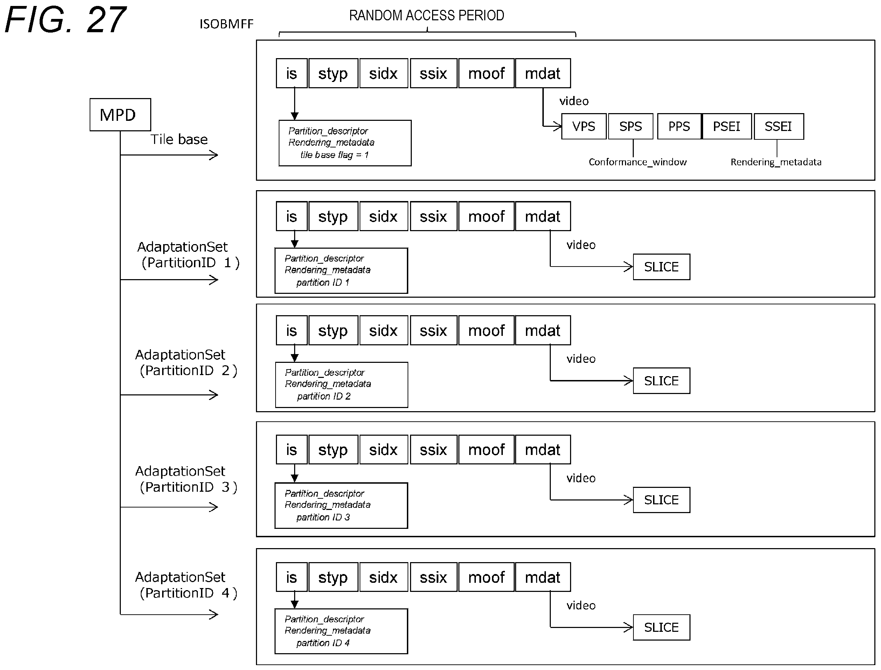

Fig. 27 schematically illustrates an MP4 stream (track) in the case of performing encoding using the tile function using each partition as a tile. In this case, one tile-based MP4 stream (tile-based container) and MP4 streams (tile containers) of four partitions are present. In each MP4 stream, similarly, each random access period has a configuration starting with an initialization segment (IS) followed by boxes of "styp", "sidx (Segment index box)", "ssix (Sub-segment index box)", "moof (Movie fragment box)" and "mdat (Media data box)".

The initialization segment (IS) has a box (Box) structure based on an ISO base media file format (ISOBMFF). A partition descriptor (see Fig. 23) is inserted in this initialization segment (IS). Furthermore, rendering metadata (Rendering_metadata) (see Fig. 9) is inserted in the initialization segment (IS). In the tile-based MP4 stream (tile-based container), the partition descriptor has "tile base flag = 1". Furthermore, in the MP4 streams (tile containers) of the first to fourth partitions, "partition IDs" are 1 to 4.

The "styp" box includes segment type information. The "sidx" box includes range information of each track (track), indicates the position of "moof"/"mdat", and also indicates the position of each sample (picture) in "mdat". The "ssix" box includes classification information of tracks, and classification of I/P/B types is performed.

The "moof" box includes control information. In the mdat" box of the tile-based MP4 stream (tile-based container), NAL units of "VPS", "SPS", "PPS", "PSEI", and "SSEI" are arranged. The information of the cutout position "Conformance_window" is inserted in "SPS". Furthermore, an SEI message having rendering metadata (Rendering_metadata) (see Fig. 9) is inserted as a NAL unit of "SSEI". Meanwhile, in the mdat" box of the MP4 stream (tile container) of each partition, a NAL unit of "SLICE" having the coded image data of each partition is arranged.

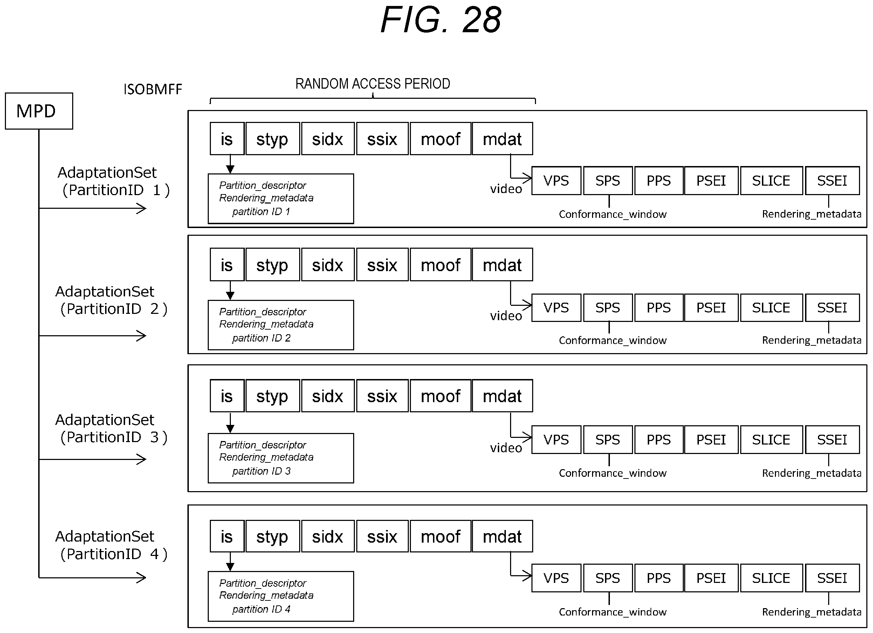

Fig. 28 schematically illustrates an MP4 stream (track) in the case of individually encoding each partition. In this case, MP4 streams of four partitions are present. In each MP4 stream, similarly, each random access period has a configuration starting with an initialization segment (IS) followed by boxes of "styp", "sidx (Segment index box)", "ssix (Sub-segment index box)", "moof (Movie fragment box)" and "mdat (Media data box)".

The initialization segment (IS) has a box (Box) structure based on an ISO base media file format (ISOBMFF). A partition descriptor (see Fig. 23) is inserted in this initialization segment (IS). Furthermore, rendering metadata (Rendering_metadata) (see Fig. 9) is inserted in the initialization segment (IS). In the MP4 streams of the first to fourth partitions, "partition IDs" are 1 to 4.

The "styp" box includes segment type information. The "sidx" box includes range information of each track (track), indicates the position of "moof"/"mdat", and also indicates the position of each sample (picture) in "mdat". The "ssix" box includes classification information of tracks, and classification of I/P/B types is performed.

The "moof" box includes control information. In the mdat" box of the MP4 stream of each partition, NAL units of "VPS", "SPS", "PPS", "PSEI", "SLICE", and "SSEI" are arranged. The information of the cutout position "Conformance_window" is inserted in "SPS". Furthermore, an SEI message having rendering metadata (Rendering_metadata) (see Fig. 9) is inserted as a NAL unit of "SSEI".

Returning to Fig. 4, the service receiver 200 includes a container decoder 203, a video decoder 204, a renderer 205, and a transmission request unit 206. The transmission request unit 206 requests the service transmission system 100 to transmit MP4 streams of a predetermined number of partitions corresponding to a display region, of the partitions of the projection picture.

In this case, in the transmission request unit 206, the value of the predetermined number is a decodable maximum value or a value close thereto, on the basis of decoding capability and information of the number of pixels and the frame rate in the coded stream of each partition of the projection picture. Here, the information of the number of pixels and the frame rate in the coded stream of each partition can be acquired from the MPD file (see Figs. 25 and 26) received in advance from the service transmission system 100.

### "Calculation Example of Maximum Value"

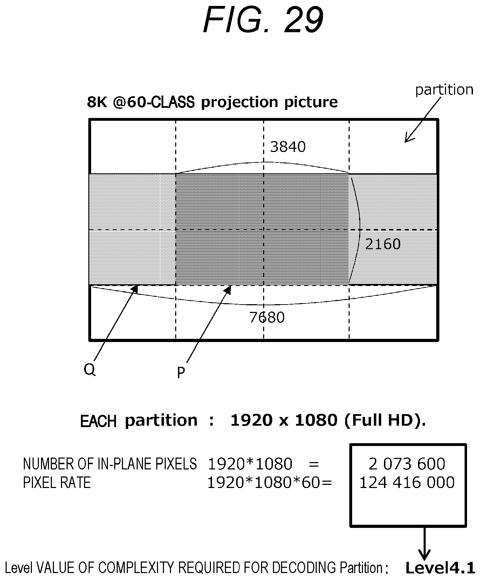

Fig. 29 illustrates an example of dividing an 8 K/60 Hz-class projection picture by a 1920 × 1080 (Full HD) partition size. In this case, the number of in-plane pixels of a partition is 1920*1080 = 2073600, and a pixel rate is 1920*1080*60 = 124416000. In this case, the level value of complexity required for decoding the partition is "Level4.1".

For example, in a case where the service receiver 200 has a decoder of "Level5.1" for 4 K/60 Hz decoding, the maximum number of Luma pixels in the plane is 8912896, and the pixel rate (the maximum number of processable pixels per second) is 534773760. Therefore, in this case, 534773760/124416000 = 4.29,..., and the maximum value is calculated as 4. In this case, the service receiver 200 can decode up to four partitions. The four partitions indicated by the arrow P indicate examples of partitions corresponding to the display region selected in this case.

Furthermore, for example, in a case where the service receiver 200 has a decoder of "Level5.2" for 4 K/120 Hz decoding, the maximum number of Luma pixels in the plane is 8912896, and the pixel rate (the maximum number of processable pixels per second) is 1069547520. Therefore, in this case, 1069547520/124416000 = 8.59,..., and the maximum value is calculated as 8. In this case, the service receiver 200 can decode up to eight partitions. The eight partitions indicated by the arrow Q indicate examples of partitions corresponding to the display region selected in this case.

Returning to Fig. 4, the container decoder 203 extracts the coded stream of each partition from the MP4 streams of the predetermined number of partitions corresponding to the display region sent from the service transmission system 100, and sends the extracted coded stream to the video decoder 204. Note that, in the case where division is performed by the tile method, not only the MP4 streams of the predetermined number of partitions corresponding to the display region but also the tile-based MP4 streams are sent from the service transmission system 100. Therefore, the container decoder 203 also sends the coded stream including the parameter set information and the like included in the tile-based MP4 stream to the video decoder 204.

The video decoder 204 applies decoding processing to the coded streams of the predetermined number of partitions corresponding to the display region to obtain image data of the predetermined number of partitions corresponding to the display region. The renderer 205 applies rendering processing to the image data of the predetermined number of partitions obtained as described above to obtain a rendered image (image data) corresponding to the display region.

In this case, when the user selects a predetermined viewpoint grid from a group determined according to the attribute of the user or the contract content, the renderer 205 obtains the display image data having the viewpoint grid as the center position. The user can recognize the current display range in the range m1 of the whole image and can also recognize viewpoint grids that can be further selected by the user on the basis of the UI image (see Figs. 16, 18, and 20) superimposed on the main image. The user can select an arbitrary viewpoint grid and switch the display image on the basis of the recognition.

Note that the user can shift the center position of the display image from the position of the viewpoint grid after selecting the arbitrary viewpoint grid and switching the display image. The user can select the viewpoint grid and shift the center position of the display image, as follows, for example.

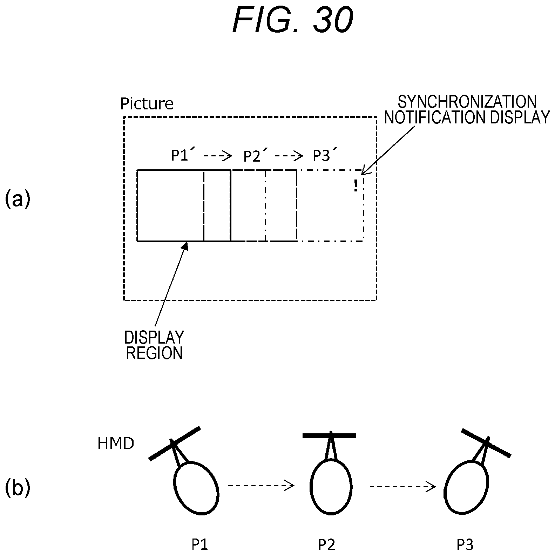

Fig. 30 illustrates an example of a case of using an HMD as a display device. In this case, as illustrated in Fig. 30(b), when the user who is wearing the HMD turns the head from the left to right in the manner of P1 → P2 → P3, the display region observed by the HMD moves in the manner of P1' → P2' → P3', as illustrated in Fig. 30(a). In this case, for example, in a case where the user suddenly turns the head, that is, in a case where the acceleration is large, the viewpoint grid located next in a rotation direction is selected, and the display image intermittently changes. Meanwhile, in a case where the user slowly turns the head, that is, in a case where the acceleration is small, the display region continuously changes in a scrolling manner. In this case, it is conceivable to notify the user that the display region matches with the position of the viewpoint grid, that is, the display region becomes synchronized with the viewpoint grid, using UI display. In the illustrated example, the display region matches with and becomes synchronized with the position of the viewpoint grid in the direction of P3', and an exclamation mark "!", which represents synchronization, is displayed, for example.

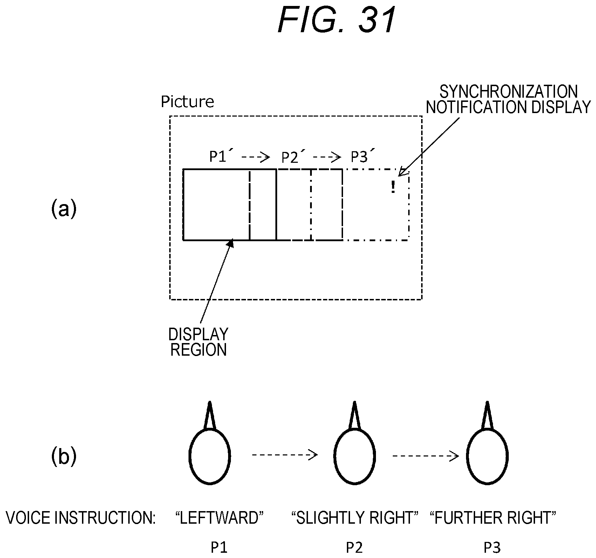

Furthermore, Fig. 31 illustrates an example of a case of using a display panel such as a TV as a display device. In this case, as illustrated in Fig. 31(b), when a voice instruction is changed such as P1 → P2 → P3, the display region displayed on a display panel moves in the manner of P1' → P2' → P3', as illustrated in Fig. 31(a). In this case, the display region continuously changes in a scrolling manner. By the voice instruction such as "left-side viewpoint" or "right side viewpoint", the viewpoint grid in an instruction direction is selected and the display image intermittently changes. In this case, it is conceivable to notify the user that the display region matches with the position of the viewpoint grid, that is, the display region becomes synchronized with the viewpoint grid, using UI display. In the illustrated example, the display region matches with and becomes synchronized with the position of the viewpoint grid in the direction of P3', and an exclamation mark "!", which represents synchronization, is displayed, for example.

In a case where the display region going out of the decoding range is predicted, the transmission request unit 206 determines switching of a set of the MP4 streams of the predetermined number of partitions corresponding to the display region to obtain a decoding range including the display region, and requests the service transmission system 100 to transmit a new set (distribution stream set).

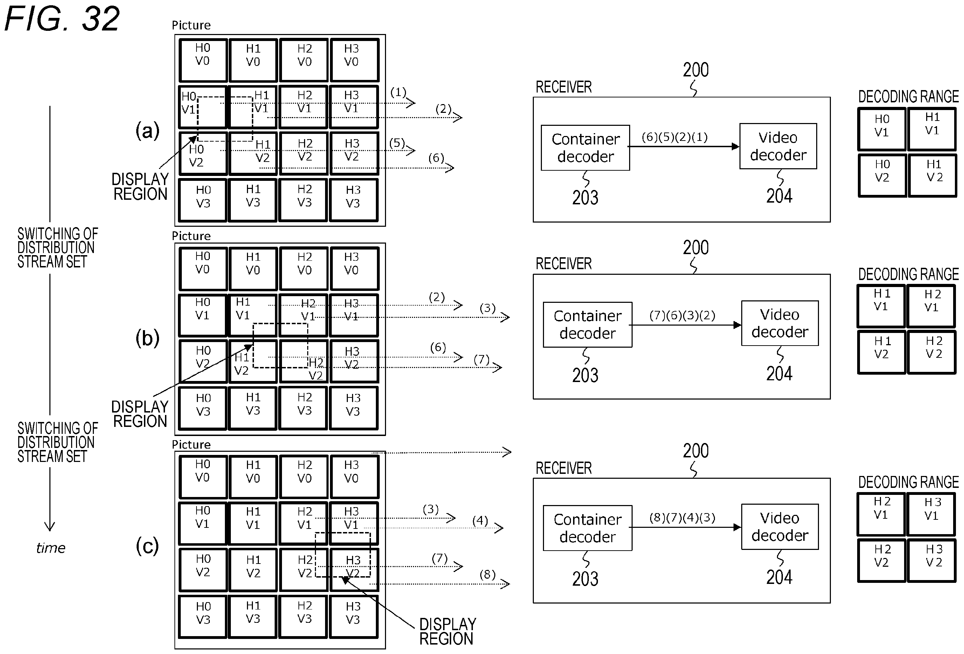

Fig. 32 illustrates an example of switching the distribution stream set associated with movement of the display region. In this example, MP4 streams of four partitions corresponding to the display region are transmitted (distributed). When the display region is at the position illustrated in Fig. 32(a), partitions corresponding to the display region are four partitions located at (H0, V1), (H1, V1), (H0, V2), and (H1, V2), and the MP4 streams of these partitions are transmitted in order of, for example, (1) → (2) → (5) → (6).

In this case, in the service receiver 200, the coded streams are extracted from the MP4 streams of these partitions and are decoded by the video decoder 204. That is, the decoding range in this case is the partitions at positions of (H0, V1), (H1, V1), (H0, V2), and (H1, V2).

Next, when the display region moves to the position illustrated in Fig. 32(b), partitions corresponding to the display region are four partitions located at (H1, V1), (H2, V1), (H1, V2), and (H2, V2). Therefore, switching of the distribution stream set is performed, and the MP4 streams of these partitions are transmitted in order of, for example, (2) → (3) → (6) → (7).

In this case, in the service receiver 200, the coded streams are extracted from the MP4 streams of these partitions and are decoded by the video decoder 204. That is, the decoding range in this case is partitions at positions of (H1, V1), (H2, V1), (H1, V2), and (H2, V2).

Next, when the display region moves to the position illustrated in Fig. 32(c), partitions corresponding to the display region are four partitions located at (H2, V1), (H3, V1), (H2, V2), and (H3, V2). Therefore, switching of the distribution stream set is performed, and the MP4 streams of these partitions are transmitted in order of, for example, (3) → (4) → (7) → (8).

In this case, in the service receiver 200, the coded streams are extracted from the MP4 streams of these partitions and are decoded by the video decoder 204. That is, the decoding range in this case is partitions at positions of (H2, V1), (H3, V1), (H2, V2), and (H3, V2).

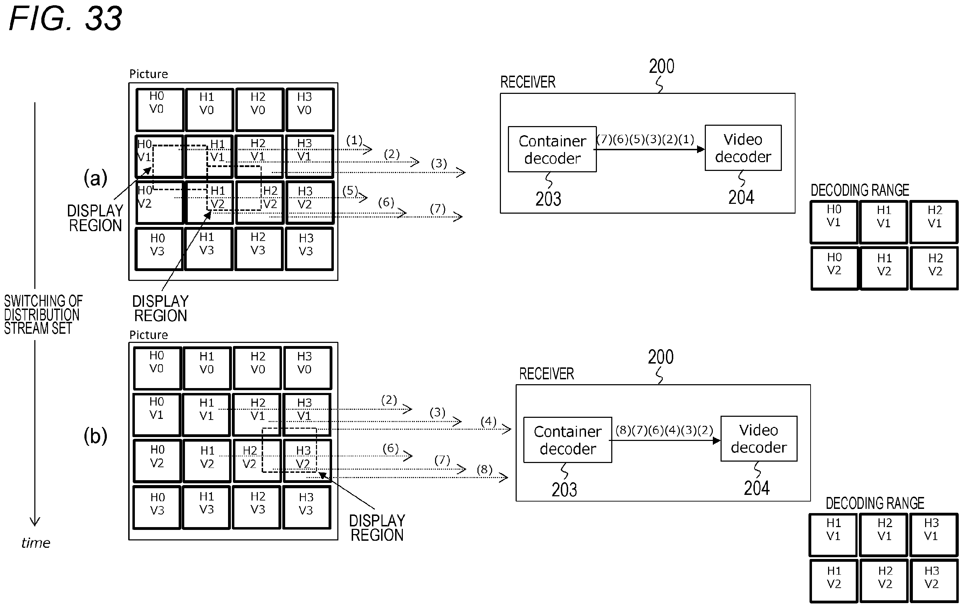

Fig. 33 illustrates another example of switching a distribution stream set associated with movement of a display region. In this example, MP4 streams of six partitions corresponding to the display region are transmitted (distributed). When the display region is at the position illustrated on the left side in Fig. 33(a), partitions corresponding to the display region are six partitions located at (H0, V1), (H1, V1), (H2, V1), (H0, V2), (H1, V2), and (H2, V2), and the MP4 streams of these partitions are transmitted in order of, for example, (1) → (2) → (3) → (5) → (6) → (7).

In this case, in the service receiver 200, the coded streams are extracted from the MP4 streams of these partitions and are decoded by the video decoder 204. That is, the decoding range in this case is the partitions at positions of (H0, V1), (H1, V1), (H2, V1), (H0, V2), (H1, V2), and (H2, V2).

Next, when the display region moves to the position illustrated on the right side in Fig. 33(a), partitions corresponding to the display region are maintained to the six partitions located at (H0, V1), (H1, V1), (H2, V1), (H0, V2), (H1, V2), and (H2, V2). Therefore, there is no switching of the distribution stream set, and the MP4 streams of these partitions are transmitted in order of, for example, (1) → (2) → (3) → (5) → (6) → (7).

In this case, in the service receiver 200, the coded streams are extracted from the MP4 streams of these partitions and are decoded by the video decoder 204. That is, the decoding range in this case is partitions at positions of (H1, V1), (H2, V1), (H1, V2), and (H2, V2).

Next, when the display region moves to the position illustrated in Fig. 33(b), partitions corresponding to the display region are six partitions located at (H1, V1), (H2, V1), (H3, V1), (H1, V2), (H2, V2), and (H3, V2). Therefore, switching of the distribution stream set is performed, and the MP4 streams of these partitions are transmitted in order of, for example, (2) → (3) → (4) → (6) → (7) → (8).

In this case, in the service receiver 200, the coded streams are extracted from the MP4 streams of these partitions and are decoded by the video decoder 204. That is, the decoding range in this case is partitions at positions of (H1, V1), (H2, V1), (H3, V1), (H1, V2), (H2, V2), and (H3, V2).

As is clear from the examples illustrated in Figs. 32 and 33, the frequency of switching of the distribution stream set due to the change of the display region decreases as the number of partitions corresponding to the display region becomes larger. When the distribution stream set is switched, a transmission request is made and transmission of the MP4 streams of the new set needs to be received, a time lag from completion of the decoding processing to start of display occurs, and display performance in VR reproduction deteriorates.

In the present embodiment, the number of partitions corresponding to the display region is set to the decodable maximum value by the service receiver 200 or the value close thereto. Therefore, the frequency of switching the distribution stream set associated with the movement of the display region can be reduced, and the display performance in VR reproduction can be improved.

### "Configuration Example of Service Transmission System"

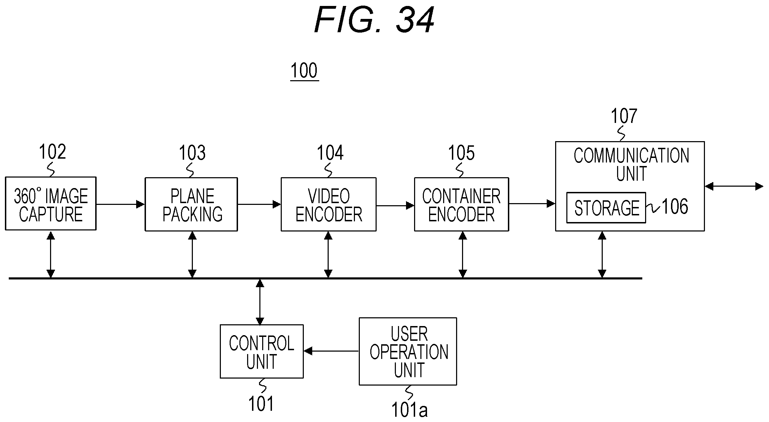

Fig. 34 illustrates a configuration example of the service transmission system 100. The service transmission system 100 includes a control unit 101, a user operation unit 101a, the 360° image capture unit 102, the plane packing unit 103, the video encoder 104, the container encoder 105, and a communication unit 107 including the storage 106.

The control unit 101 includes a central processing unit (CPU) and controls operation of each unit of the service transmission system 100 on the basis of a control program. The user operation unit 101a is a keyboard, a mouse, a touch panel, a remote controller, and the like for the user to perform various operations.

The 360° image capture unit 102 images an object using a predetermined number of cameras to obtain image data of a spherical captured image (360° VR image). For example, the 360° image capture unit 102 images an object by a back to back (Back to Back) method to obtain a front image and a rear image having an ultra wide viewing angle that is a viewing angle of 180° or higher, each of which is imaged using a fisheye lens, as the spherical captured image (see Fig. 5(a)).

The plane packing unit 103 cuts out part or all of the spherical captured image obtained in the 360° image capture unit 102 and performs plane packing for the cutout spherical captured image to obtain a rectangular projection picture (Projection picture) (see Fig. 5(b)). In this case, as the format type of the projection picture, for example, equirectangular (Equirectangular), cross-cubic (Cross-cubic), or the like is selected. Note that the plane packing unit applies scaling to the projection picture as necessary to obtain the projection picture having a predetermined resolution (see Fig. 5(c)).

The video encoder 104 applies encoding such as MPEG4-AVC or HEVC to the image data of the projection picture from the plane packing unit 103, for example, to obtain the coded image data, and generates a coded stream including the coded image data. In this case, the video encoder 104 divides the projection picture into a plurality of partitions (divided regions) to obtain coded streams corresponding to the partitions. The cutout position information is inserted in the SPS NAL unit of the coded stream (see the information of "conformance_window" in Fig. 6).

Here, the video encoder 104 individually encodes each partition, collectively encodes the whole projection picture, or performs encoding using a tile function using each partition as a tile, for example, in order to obtain the coded stream corresponding to each partition of the projection picture. Thereby, the reception side can independently decode the coded stream corresponding to each partition.

Furthermore, the video encoder 104 inserts an SEI message (SEI message) having rendering metadata (rendering meta information) into an "SEIs" portion of an access unit (AU). In the rendering meta information, information of a cutout range in the case of performing plane packing for the spherical captured image, information of a scaling ratio from the original size of the projection picture, information of the format type of the projection picture, information indicating whether or not the backward compatibility for making the center O (p, q) at the cutout position coincident with the reference point RP (x, y) of the projection picture has been set, and the like are inserted (see Fig. 9).

Furthermore, the rendering meta information includes information of a predetermined number of grouped viewpoint grids (see Fig. 12). The information of the viewpoint grids includes information of an azimuth angle (azimuth information) and an elevation angle (elevation information).

The container encoder 105 generates a container including the coded stream generated in the video encoder 104, here, an MP4 stream, as a distribution stream. In this case, a plurality of MP4 streams each including a coded stream corresponding to each partition is generated (see Figs. 27 and 28). In this case, the container encoder 105 inserts the rendering metadata (see Fig. 9) into a layer of the container.

Here, in the case of performing encoding using the tile function using each partition as a tile, the container encoder 105 generates an MP4 (base container) of a base (base) including a parameter set such as SPS including sublayer information and the like, in addition to the plurality of MP4 streams each including a coded stream corresponding to each partition (see Fig. 27).

Furthermore, the container encoder 105 inserts a partition descriptor (see Fig. 23) into the layer of the container, specifically, to an initialization segment (IS) of MP4. The partition descriptor includes information such as the number of pixels of the partition and the frame rate.

The storage 106 included in the communication unit 107 accumulates the MP4 streams of the partitions generated by the container encoder 105. Note that, in the case where the partitions are divided by the tile method, the storage 106 also accumulates the tile-based MP4 streams. Furthermore, the storage 106 accumulates the MPD file (see Figs. 25 and 26) generated in the container decoder 105, for example.

The communication unit 107 receives a distribution request from the service receiver 200 and transmits the MPD file to the service receiver 200 in response to the request. The service receiver 200 recognizes the configuration of the distribution stream according to the MPD file.

Furthermore, the communication unit 107 receives the distribution request (transmission request) of the MP4 streams corresponding to the predetermined number of partitions corresponding to the display region from the service receiver 200, and transmits the MP4 streams to the service receiver 200. For example, a required partition is designated by the partition ID in the distribution request from the service receiver 200.

### "Configuration Example of Service Receiver"

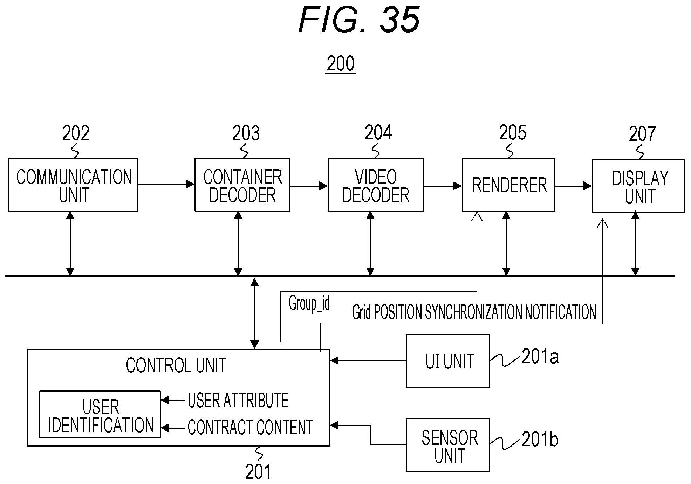

Fig. 35 illustrates a configuration example of the service receiver 200. The service receiver 200 includes a control unit 201, a UI unit 201a, a sensor unit 201b, a communication unit 202, the container decoder 203, the video decoder 204, the renderer 205, and a display unit 207.

The control unit 201 includes a central processing unit (CPU) and controls operation of each unit of the service receiver 200 on the basis of a control program. The UI unit 201a is used for performing a user interface, and includes, for example, a pointing device for the user to operate movement of the display region, a microphone for the user to input a voice to instruct the movement of the display region, and the like. The sensor unit 201b includes various sensors for acquiring a user state and environment information, and includes, for example, a posture detection sensor or the like mounted on a head mounted display (HMD).

The communication unit 202 transmits the distribution request to the service transmission system 100 and receives the MPD file (see Figs. 25 and 26) from the service transmission system 100 in response to the request, under the control of the control unit 201. The communication unit 202 sends the MPD file to the control unit 201. Thereby, the control unit 201 recognizes the configuration of the distribution stream.

Furthermore, the communication unit 202 transmits the distribution request (transmission request) of the MP4 streams corresponding to the predetermined number of partitions corresponding to the display region to the service transmission system 100, and receives the MP4 streams corresponding to the predetermined number of partitions from the service transmission system 100 in response to the request, under the control of the control unit 201.

Here, the control unit 101 obtains the direction and speed of the movement of the display region, and further the information of switching of a viewpoint grid, on the basis of information of the direction and amount of the movement obtained by a gyro sensor mounted on the HMD or the like, or on the basis of pointing information by a user operation or voice UI information of the user, and selects a predetermined number of partitions corresponding to the display region. In this case, the control unit 101 sets the value of the predetermined number to a decodable maximum value or a value close thereto, on the basis of decoding capability and the information of the number of pixels and the frame rate in the coded stream of each partition recognized from the MPD file. The transmission request unit 206 illustrated in Fig. 4 is configured by the control unit 101.

Furthermore, the control unit 201 has a user identification function. The control unit 201 identifies what type of user on the basis of user attributes (age, gender, interest, proficiency, login information, and the like) or contract content, and determines a group of viewpoint grids available to the user. Then, the control unit 201 sets the renderer 205 to use the viewpoint grids of the group available to the user.

Note that the illustrated example includes only one system of the renderer 205 and the display unit 207. However, for example, in a case of a game machine or the like, it is conceivable to have a plurality of systems of the renderers 205 and the display units 207 to enable a plurality of users to see display images independent of one another. In that case, user identification similar to the above description is performed for the plurality of users, and control can be performed to enable the respective users to use the renderers 205 of the respective systems and viewpoint grids of a group.

The container decoder 203 extracts the coded streams of each partition on the basis of information of a "moof" block or the like from the MP4 streams of the predetermined number of partitions corresponding to the display region received by the communication unit 202, and sends the coded streams to the video decoder 204. Note that, in the case of performing division using the tile method, not only the MP4 streams of the predetermined number of partitions corresponding to the display region but also the tile-based MP4 stream are received by the communication unit 202. Therefore, the container decoder 203 also sends the coded stream including the parameter set information included in the tile-based MP4 stream and the like to the video decoder 204.

Furthermore, the container decoder 203 extracts the partition descriptor (see Fig. 23) inserted in the initialization segment (IS) of each MP4 stream and sends the partition descriptor to the control unit 201. The control unit 201 acquires the information of the number of pixels in each partition and the frame rate from the descriptor. Furthermore, the container decoder 203 extracts the information of a "moov" block and the like from each MP4 stream and sends the information to the control unit 201. The rendering metadata (see Fig. 9) is present as one of the information of a "moov" block, and the control unit 201 acquires the information of grouped viewpoint grids and the like.

The video decoder 204 applies decoding processing to the coded streams of the predetermined number of partitions corresponding to the display region supplied from the container decoder 203 to obtain the image data. Furthermore, the video decoder 204 extracts the parameter set and the SEI message inserted in the video stream extracted by the container decoder 203 and sends extracted information to the control unit 201. The extracted information includes information of the cutout position "conformance_window" inserted in the SPS NAL packet and further the SEI message including the rendering metadata (see Fig. 9).

The renderer 205 applies the rendering processing to the image data of the predetermined number of partitions obtained in the video decoder 204 to obtain a rendered image (image data) corresponding to the display region. In this case, when the user selects a predetermined viewpoint grid from a group determined according to the attribute of the user or the contract content, the renderer 205 obtains the display image data having the viewpoint grid as the center position.

The user can recognize the current display range in the range m1 of the whole image and can also recognize viewpoint grids that can be further selected by the user on the basis of the UI image (see Figs. 16, 18, and 20) superimposed on the main image. The user can select an arbitrary viewpoint grid and switch the display image on the basis of the recognition (see Figs. 30 and 31). The display unit 207 displays the rendered image (image data) obtained by the renderer 205. The display unit 207 includes a head mounted display (HMD), a display panel, and the like, for example. Grid position synchronization notification information is also provided from the control unit 201 to the display unit 207 in order to notify the user that the display region becomes synchronized with the position of the viewpoint grid, using mark display or the like (see Figs. 30 and 31), as described above. Note that the notification to the user may be performed by sound.

As described above, the service transmission system 100 in the transmission/reception system 10 illustrated in Fig. 3 transmits a coded stream obtained by encoding image data of a wide viewing angle image and rendering meta information including information of a predetermined number of grouped viewpoint grids. Therefore, the service receiver 200 can process the image data of the wide viewing angle image obtained by decoding the coded stream on the basis of the rendering meta information to obtain display image data and can display a certain partial image in the wide viewing angle image between receivers by use or by user with consistency.

### <2. Modification>

### "Application to MPEG-2 TS and MMT"

Note that, in the above-described embodiment, an example in which the container is an MP4 (ISOBMFF) has been described. However, in the present technology, the container is not limited to MP4, and the present technology can be similarly applied to containers in other formats such as MPEG-2 TS and MMT.

For example, in the case of MPEG-2 TS, the container encoder 105 of the service transmission system 100 illustrated in Fig. 4 generates a transport stream (Transport Stream) including the coded stream of each partition of the projection picture.

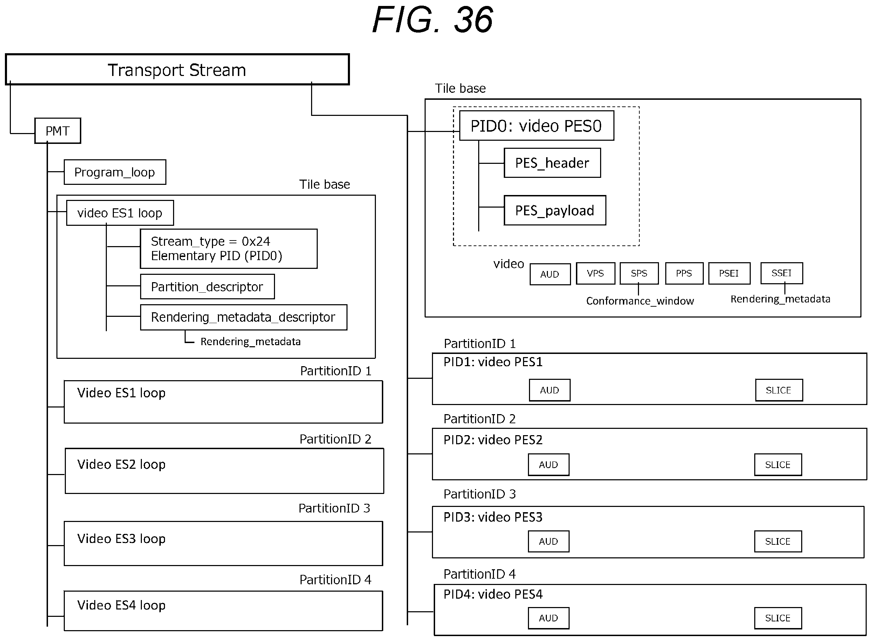

Fig. 36 illustrates a configuration example of a transport stream in a case where video encoding is tile-compatible. In this configuration example, a PES packet "video PES0" of the tile-based coded stream identified with PID0 is present. In the payload of the PES packet, "video PESO", NAL units of "AUD", "VPS", "SPS", "PPS", "PSEI", and "SSEI" are arranged. The information of the cutout position "Conformance_window" is inserted in "SPS". Furthermore, an SEI message having rendering metadata (see Fig. 9) is inserted in "SSEI".

Furthermore, PES packets "video PES1" to "video PES4" of the coded streams of the first to fourth partitions (tiles) identified with PID1 to PID4 are present. In the payloads of these PES packets, NAL units of "AUD" and "SLICE" are arranged.

Furthermore, video elementary stream loops (video ES loops) corresponding to the PES packets "video PES0" to "video PES4" are present in PMT. In each loop, information such as a stream type and a packet identifier (PID) is arranged corresponding to a coded stream and a descriptor describing information regarding the coded stream is also arranged corresponding to the coded stream. This stream type is set to "0x24" indicating a video stream. Furthermore, a rendering metadata descriptor including the partition descriptor (see Fig. 23) and the rendering metadata (see Fig. 9) is inserted as one of descriptors.

Note that the configuration example of the transport stream in a case where the video encoding is encoding of an independent stream for each partition is not illustrated but is a similar configuration. In this case, there is no portion corresponding to the PES packet "video PES0" of the tile-based coded stream, and NAL units of "AUD", "VPS", "SPS", "PPS", "PSEI", "SLICE", and "SSEI" are arranged in the payloads of the PES packets "video PES1" to "video PES4" of the coded streams of the first to fourth partitions.

Furthermore, for example, in the case of MMT, the container encoder 104 of the service transmission system 100 illustrated in Fig. 4 generates an MMT stream (MMT Stream) including a video stream.

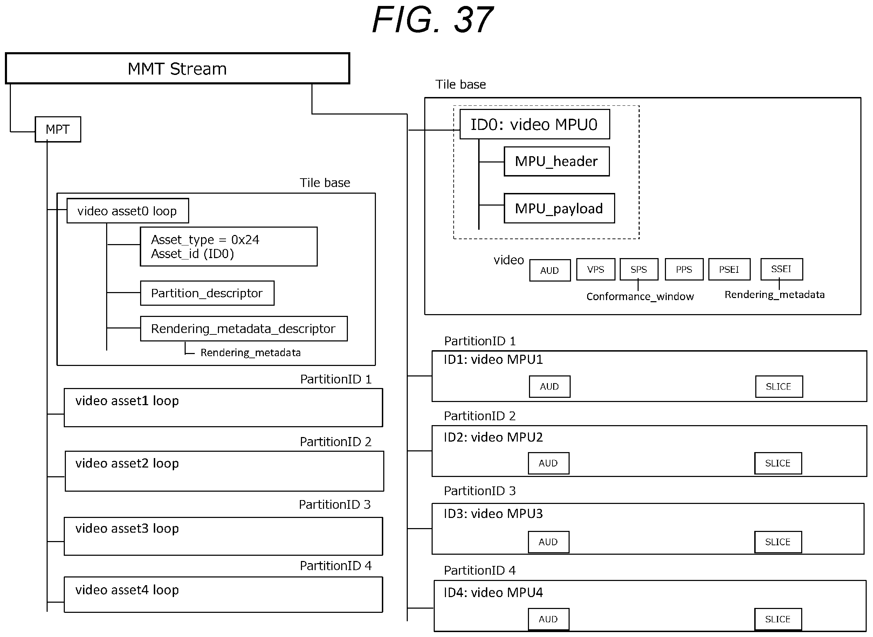

Fig. 37 illustrates a configuration example of an MMT stream in a case where video encoding is tile-compatible. In this configuration example, an MPU packet "video MPU0" of the tile-based coded stream identified with ID0 is present. In the payload of the MPU packet "video MPU0", NAL units of "AUD", "VPS", "SPS", "PPS", "PSEI", and "SSEI" are arranged. The information of the cutout position "Conformance_window" is inserted in "SPS". Furthermore, an SEI message having rendering metadata (see Fig. 9) is inserted in "SSEI".

Furthermore, MPU packets "video MPU1" to "video MPU4" of the coded streams of the first to fourth partitions (tiles) identified with ID1 to ID4 are present. In the payloads of these MPU packets, NAL units of "AUD" and "SLICE" are arranged.

Furthermore, video asset loops (video asset loops) corresponding to the MPU packets "video MPU0" to "video MPU4" are present in MPT. In each loop, information such as an asset type and an asset identifier (ID) is arranged corresponding to a coded stream and a descriptor describing information regarding the coded stream is also arranged corresponding to the coded stream. This asset type is set to "0x24" indicating a video stream. Furthermore, a rendering metadata descriptor including the partition descriptor (see Fig. 23) and the rendering metadata (see Fig. 9) is inserted as one of descriptors.

Note that the configuration example of the MMT stream in a case where the video encoding is encoding of an independent stream for each partition is not illustrated but is a similar configuration. In this case, there is no portion corresponding to the MPU packet "video MPU0" of the tile-based coded stream, and NAL units of "AUD", "VPS", "SPS", "PPS", "PSEI", "SLICE", and "SSEI" are arranged in the payloads of the MPU packets "video MPU1" to "video MPU4" of the coded streams of the first to fourth partitions.

Furthermore, in the above-described embodiment, an example in which a tile stream has a multi stream configuration in the case where video encoding is tile-compatible has been described. However, it is also conceivable that the tile stream has a single stream configuration.

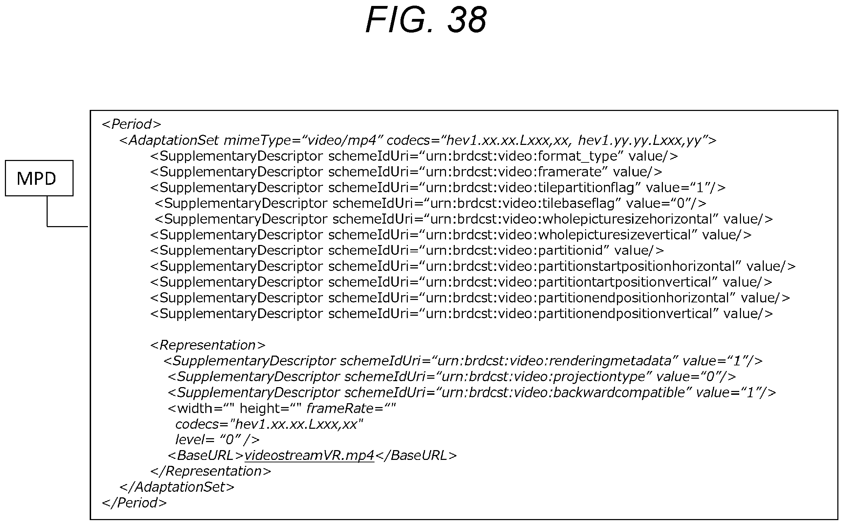

Fig. 38 illustrates a description example of an MPD file in the case where the tile stream has a single stream configuration. In the MPD file, an adaptation set (AdaptationSet) corresponding to an MP4 stream (track) corresponding to the tile stream is present.

In the adaptation set, the description of "<AdaptationSet mimeType="video/mp4" codecs="hev1.xx.xx.Lxxx,xx,hev1.yy.yy.Lxxx,yy">" indicates the presence of an adaptation set (AdaptationSet) for a video stream, supply of the video stream as an MP4 file structure, and the presence of the HEVC-coded video stream (coded image data).

The description of "<SupplementaryDescriptor schemeIdUri="urn:brdcst:video:format_type" value/>" indicates the format type of the projection picture. The description of "<SupplementaryDescriptor schemeIdUri="urn:brdcst:video:framerate" value/>" indicates the frame rate (full frame rate) of the picture.

The description of "<SupplementaryDescriptor schemeIdUri="urn:brdcst:video:tilepartitionflag" value="1"/>" indicates whether or not the picture is divided by the tile method. The description of "<SupplementaryDescriptor schemeIdUri="urn:brdcst:video:tilebaseflag" value="0"/>" indicates that the container is a container other than the tile-based container.

The description of "<SupplementaryDescriptor schemeIdUri="urn:brdcst:video:wholepicturesizehorizontal" value/>" indicates the number of horizontal pixels of the whole picture. The description of "<SupplementaryDescriptor schemeIdUri="urn:brdcst:video:wholepicturesizevertical" value/>" indicates the number of vertical pixels of the whole picture.

The description of "<SupplementaryDescriptor schemeIdUri="urn:brdcst:video:partitionid" value/>" indicates the partition ID. The description of "<SupplementaryDescriptor schemeIdUri="urn:brdcst:video:partitionstartpositionhoriz ontal" value/>" indicates the horizontal start pixel position of the partition. The description of "<SupplementaryDescriptor schemeIdUri="urn:brdcst:video:partitiontartpositionvertic al" value/>" indicates the horizontal end pixel position of the partition.

The description of "<SupplementaryDescriptor schemeIdUri="urn:brdcst:video:partitionendpositionhorizon tal" value/>" indicates the vertical start pixel position of the partition. The description of "<SupplementaryDescriptor schemeIdUri="urn:brdcst:video:partitionendpositionvertica l" value/>" indicates the vertical end pixel position of the partition. Furthermore, the above description from the partition ID to the frame rate of the sublayer is repeated by the number of partitions in tile encoding.

Furthermore, in the adaptation set, a representation (Representation) corresponding to the video stream is present. In this representation, the description of "<SupplementaryDescriptor schemeIdUri="urn:brdcst:video:renderingmetadata" value="1"/>" indicates the presence of rendering metadata (Rendering_metadata).

Furthermore, the description of "<SupplementaryDescriptor schemeIdUri="urn:brdcst:video:projectiontype" value="0"/>" indicates that the format type of the projection picture is equirectangular (Equirectangular). The description of "<SupplementaryDescriptor schemeIdUri="urn:brdcst:video:backwardcompatible" value="1"/>" indicates that backward compatibility has been set, that is, the center O (p, q) at the cutout position indicated by the cutout position information and inserted in the layer of the video stream has been set to coincide with the reference point RP (x, y) of the projection picture.

Furthermore, in the representation, the description of "width = "" height = "" frameRate = """, "codecs = "hev1.xx.xx.Lxxx, xx"", and "level = "0"" indicates a resolution, a frame rate, and a codec type, and further a level "0" is provided as tag information. Furthermore, the description of "<BaseURL>videostreamVR.mp4</BaseURL>" indicates a location of the MP4 stream as "videostreamVR0.mp4".

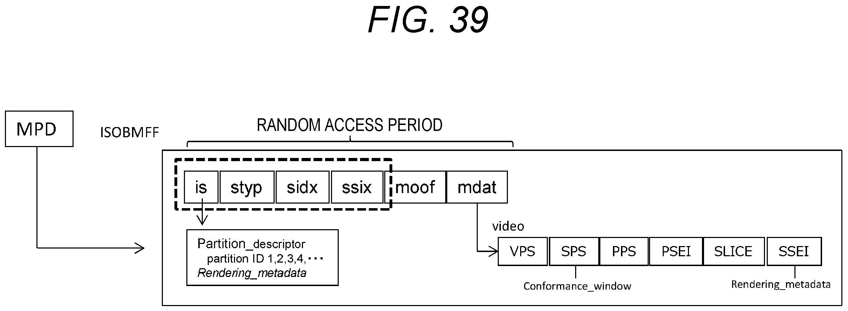

Fig. 39 schematically illustrates an MP4 stream (track) in the case where the tile stream has a single stream configuration. In this case, one MP4 stream corresponding to the tile stream is present. In the MP4 stream, similarly, each random access period has a configuration starting with an initialization segment (IS) followed by boxes of "styp", "sidx (Segment index box)", "ssix (Sub-segment index box)", "moof (Movie fragment box)" and "mdat (Media data box)".

The initialization segment (IS) has a box (Box) structure based on an ISO base media file format (ISOBMFF). A partition descriptor (see Fig. 23) and rendering metadata (see Fig. 9) are inserted in the initialization segment (IS). Note that the partition descriptor in this case includes information of all partitions (tiles) in the tile encoding. In the mdat" box, NAL units of "VPS", "SPS", "PPS", "PSEI", "SLICE", and "SSEI" are arranged. The information of the cutout position "Conformance_window" is inserted in "SPS". Furthermore, an SEI message having rendering metadata (Rendering_metadata) (see Fig. 9) is inserted as a NAL unit of "SSEI".

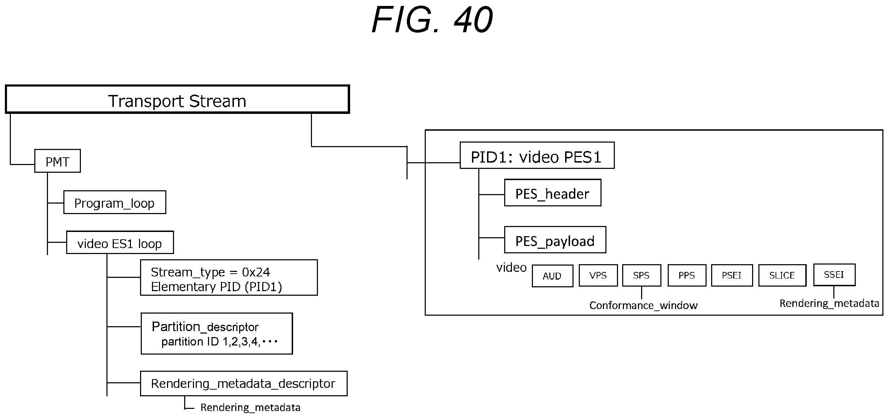

Fig. 40 illustrates a configuration example of a transport stream in a case where a tile stream has a single stream configuration. In this configuration example, a PES packet "video PES1" of a tile stream identified with PID1 is present. In the payload of the PES packet, "video PES1", NAL units of "AUD", "VPS", "SPS", "PPS", "PSEI", "SLICE", and "SSEI" are arranged. The information of the cutout position "Conformance_window" is inserted in "SPS". Furthermore, an SEI message having rendering metadata (see Fig. 9) is inserted in "SSEI".

Furthermore, a video elementary stream loop (video ES1 loop) corresponding to the PES packet "video PES1" is present in PMT. In this loop, information such as a stream type and a packet identifier (PID) is arranged corresponding to a tile stream and a descriptor describing information regarding the tile stream is also arranged corresponding to the tile stream. This stream type is set to "0x24" indicating a video stream. Furthermore, a rendering metadata descriptor including the partition descriptor (see Fig. 23) and the rendering metadata (see Fig. 9) is inserted as one of descriptors. Note that the partition descriptor in this case includes information of all partitions (tiles) in the tile encoding.

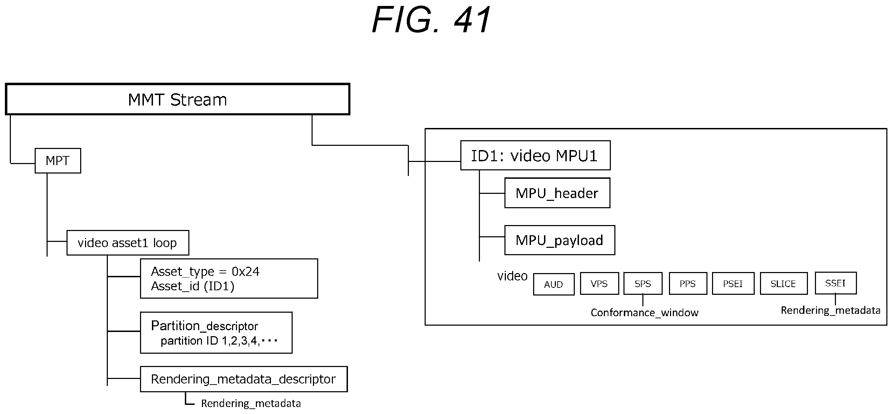

Fig. 41 illustrates a configuration example of an MMT stream in a case where a tile stream has a single stream configuration. In this configuration example, an MPU packet "video MPU1" of a tile stream identified with ID1 is present. In the payload of the MPU packet "video MPU1", NAL units of "AUD", "VPS", "SPS", "PPS", "PSEI", "SLICE", and "SSEI" are arranged. The information of the cutout position "Conformance_window" is inserted in "SPS". Furthermore, an SEI message having rendering metadata (see Fig. 9) is inserted in "SSEI".

Furthermore, a video asset loop (video asset1 loop) corresponding to the MPU packet "video MPU1" is present in MPT. In this loop, information such as an asset type and an asset identifier (ID) is arranged corresponding to a tile stream and a descriptor describing information regarding the tile stream is also arranged corresponding to the tile stream. This asset type is set to "0x24" indicating a video stream. Furthermore, a rendering metadata descriptor including the partition descriptor (see Fig. 23) and the rendering metadata (see Fig. 9) is inserted as one of descriptors. Note that the partition descriptor in this case includes information of all partitions (tiles) in the tile encoding.

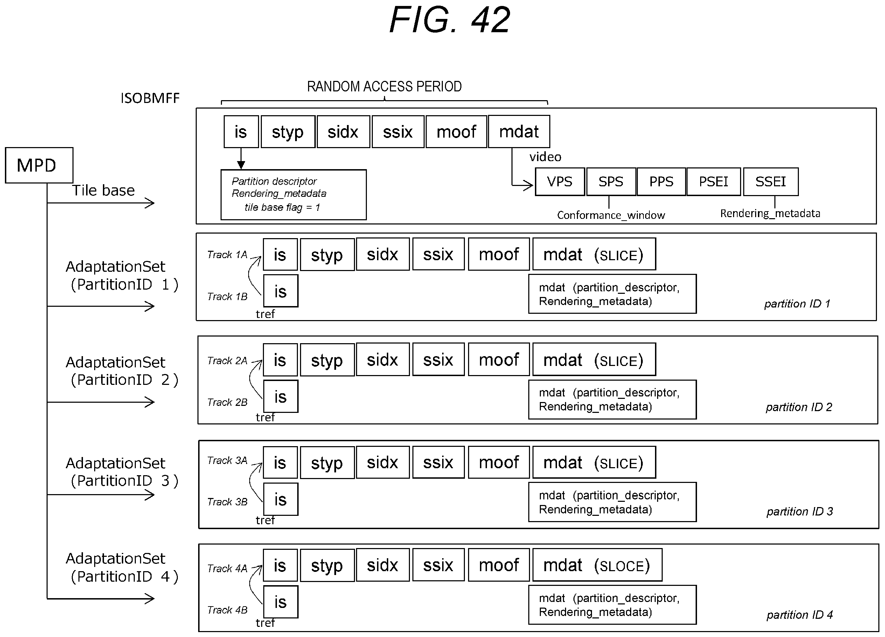

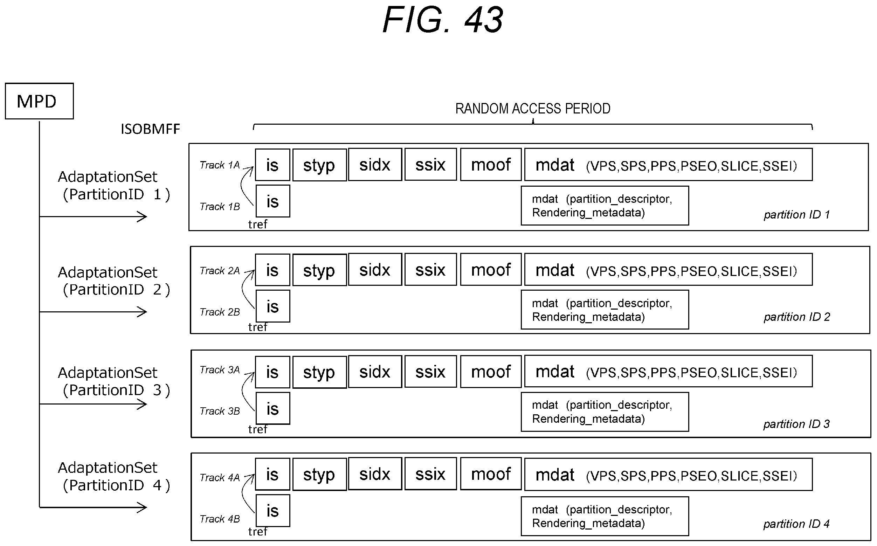

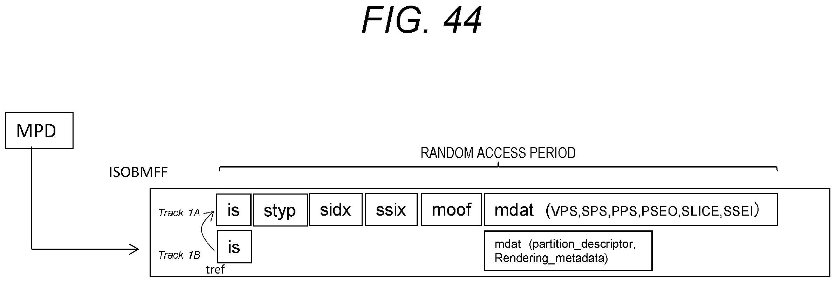

Furthermore, in the above-described embodiment, an example of containing the partition descriptor and the rendering metadata in the track containing "SLICE" of a coded video in the case where the container is MP4 has been described (see Figs. 27, 28, and 39). However, as illustrated in Figs. 42, 43, and 44, a configuration to contain the partition descriptor and the rendering metadata in "mdat" of other tracks "tracks 1B, 2B, 3B, and 4B", for the tracks "tracks 1A, 2A, 3A, and 4A" that contain "SLICE" of the coded video is also conceivable.

With the configuration illustrated in Figs. 42, 43, and 44, temporal synchronization with an associated picture is ensured for each sample (Sample). In this case, the track containing each partition descriptor and rendering metadata specifies a reference target of the track containing the coded video by the "tref" in its own initialization segment (IS).

Furthermore, in the above-described embodiment, an example of the transmission/reception system 10 including the service transmission system 100 and the service receiver 200 has been described. However, the configuration of the transmission/reception system to which the present technology can be applied is not limited to the example. For example, it is also conceivable that the portion of the service receiver 200 is a set top box or a display connected by a digital interface such as high-definition multimedia interface (HDMI), for example. Note that "HDMI" is a registered trademark.

Furthermore, the present technology can also have the following configurations.
(1) A transmission device including:
   a transmission unit configured to transmit a coded stream obtained by encoding image data of a wide viewing angle image and transmit rendering meta information including information of a predetermined number of viewpoints registered in groups.
(2) The transmission device according to (1), in which
   the wide viewing angle image is a projection picture obtained by cutting out part or all of a spherical captured image and performing plane packing for the cutout spherical captured image.
(3) The transmission device according to (1) or (2), in which
   the information of a viewpoint includes information of an azimuth angle and an elevation angle indicating a position of the viewpoint.
(4) The transmission device according to any one of (1) to (3), in which
   the transmission unit inserts the rendering meta information into a layer of the coded stream and/or a layer of a container including the coded stream and transmits the rendering meta information.
(5) The transmission device according to (4), in which
   the transmission unit further transmits a metafile including meta information regarding the coded stream, and
   the metafile includes identification information indicating the insertion of the rendering meta information in the layer of the coded stream and/or of the container.
(6) The transmission device according to (4), in which
   the container is an ISOBMFF, and
   the transmission unit inserts the rendering meta information into a moov box and transmits the rendering meta information.
(7) The transmission device according to (4), in which
   the container is an ISOBMFF, and
   the transmission unit transmits the rendering meta information, using a track different from a track including the coded stream obtained by encoding image data of the wide viewing angle image.
(8) The transmission device according to (4), in which
   the container is an MPEG2-TS, and
   the transmission unit inserts the rendering meta information into a program map table and transmits the rendering meta information.
(9) The transmission device according to (4), in which
   the container is an MMT stream, and
   the transmission unit inserts the rendering meta information into an MMT package table and transmits the rendering meta information.
(10) The transmission device according to any one of (1) to (9), in which
   the coded stream obtained by encoding image data of the wide viewing angle image is a coded stream corresponding to each divided region obtained by dividing the wide viewing angle image.
(11) The transmission device according to (10), in which
   the coded stream of each divided region is obtained by individually encoding each divided region of the wide viewing angle image.
(12) The transmission device according to (10), in which
   the coded stream of each divided region is obtained by performing encoding using a tile function using each divided region of the wide viewing angle image as a tile.
(13) The transmission device according to any one of (10) to (12), in which
   the information of a viewpoint includes information of a divided region where the viewpoint is located.
(14) A transmission method including the step of by a transmission unit, transmitting a coded stream obtained by encoding image data of a wide viewing angle image and transmitting information of a predetermined number of viewpoints registered in groups.
(15) A reception device including:
   a reception unit configured to receive a coded stream obtained by encoding image data of a wide viewing angle image and receive information of a predetermined number of viewpoints registered in groups; and
   a processing unit configured to process the image data of the wide viewing angle image obtained by decoding the coded stream on the basis of the information of a viewpoint to obtain display image data.
(16) The reception device according to (15), in which
   the processing unit uses the information of a viewpoint of a group determined according to an attribute of a user or contract content.
(17) The reception device according to (16), in which
   the processing unit obtains the display image data having a position indicated by the information of a viewpoint selected by a user operation as a center position.
(18) The reception device according to any one of (15) to (17), in which
   the reception unit receives, as the coded stream obtained by encoding image data of the wide viewing angle image, a coded stream corresponding to each divided region obtained by dividing the wide viewing angle image, and
   the processing unit decodes coded streams of a predetermined number of divided regions to be used for obtaining the display image data, of the coded streams each corresponding to each divided region.
(19) The reception device according to (18), in which
   the reception unit requests a distribution server to transmit the coded streams of a predetermined number of divided regions, and receives the coded streams of a predetermined number of divided regions from the distribution server.
(20) A reception method including:
   a reception step of receiving a coded stream obtained by encoding image data of a wide viewing angle image and receiving rendering meta information including information of a predetermined number of viewpoints registered in groups, by a reception unit; and
   a processing step of processing the image data of a wide viewing angle image obtained by decoding the coded stream on the basis of the rendering meta information to obtain display image data, by a processing unit.

A main characteristic of the present technology is to transmit a coded stream obtained by encoding image data of a wide viewing angle image and rendering meta information including information of a predetermined number of grouped viewpoint grids, thereby displaying a certain partial image in the wide viewing angle image between receivers by use or by user with consistency (see Figs. 12 and 15 to 20).

### REFERENCE SIGNS LIST

- 10: Transmission/reception system
- 100: Service transmission system
- 101: Control unit
- 101a: User operation unit
- 102: 360° image capture unit
- 103: Plane packing unit
- 104: Video encoder
- 105: Container encoder
- 106: Storage
- 107: Communication unit
- 200: Service receiver
- 201: Control unit
- 201a: UI unit
- 201b: Sensor unit
- 202: Communication unit
- 203: Container decoder
- 204: Video decoder
- 205: Renderer
- 206: Transmission request unit
- 207: Display unit

## Claims

1. A transmission device comprising:
a transmission unit configured to transmit a coded stream obtained by encoding image data of a wide viewing angle image and transmit rendering meta information including information of a predetermined number of viewpoints registered in groups.

2. The transmission device according to claim 1, wherein
the wide viewing angle image is a projection picture obtained by cutting out part or all of a spherical captured image and performing plane packing for the cutout spherical captured image.

3. The transmission device according to claim 1, wherein
the information of a viewpoint includes information of an azimuth angle and an elevation angle indicating a position of the viewpoint.

4. The transmission device according to claim 1, wherein
the transmission unit inserts the rendering meta information into a layer of the coded stream and/or a layer of a container including the coded stream and transmits the rendering meta information.

5. The transmission device according to claim 4, wherein
the transmission unit further transmits a metafile including meta information regarding the coded stream, and
the metafile includes identification information indicating the insertion of the rendering meta information in the layer of the coded stream and/or of the container.

6. The transmission device according to claim 4, wherein
the container is an ISOBMFF, and
the transmission unit inserts the rendering meta information into a moov box and transmits the rendering meta information.

7. The transmission device according to claim 4, wherein
the container is an ISOBMFF, and
the transmission unit transmits the rendering meta information, using a track different from a track including the coded stream obtained by encoding image data of the wide viewing angle image.

8. The transmission device according to claim 4, wherein
the container is an MPEG2-TS, and
the transmission unit inserts the rendering meta information into a program map table and transmits the rendering meta information.

9. The transmission device according to claim 4, wherein
the container is an MMT stream, and
the transmission unit inserts the rendering meta information into an MMT package table and transmits the rendering meta information.

10. The transmission device according to claim 1, wherein
the coded stream obtained by encoding image data of the wide viewing angle image is a coded stream corresponding to each divided region obtained by dividing the wide viewing angle image.

11. The transmission device according to claim 10, wherein
the coded stream of each divided region is obtained by individually encoding each divided region of the wide viewing angle image.

12. The transmission device according to claim 10, wherein
the coded stream of each divided region is obtained by performing encoding using a tile function using each divided region of the wide viewing angle image as a tile.

13. The transmission device according to claim 10, wherein
the information of a viewpoint includes information of a divided region where the viewpoint is located.

14. A transmission method comprising the step of
by a transmission unit, transmitting a coded stream obtained by encoding image data of a wide viewing angle image and transmitting information of a predetermined number of viewpoints registered in groups.

15. A reception device comprising:
a reception unit configured to receive a coded stream obtained by encoding image data of a wide viewing angle image and receive information of a predetermined number of viewpoints registered in groups; and
a processing unit configured to process the image data of the wide viewing angle image obtained by decoding the coded stream on a basis of the information of a viewpoint to obtain display image data.

16. The reception device according to claim 15, wherein
the processing unit uses the information of a viewpoint of a group determined according to an attribute of a user or contract content.

17. The reception device according to claim 16, wherein
the processing unit obtains the display image data having a position indicated by the information of a viewpoint selected by a user operation as a center position.

18. The reception device according to claim 15, wherein
the reception unit receives, as the coded stream obtained by encoding image data of the wide viewing angle image, a coded stream corresponding to each divided region obtained by dividing the wide viewing angle image, and
the processing unit decodes coded streams of a predetermined number of divided regions to be used for obtaining the display image data, of the coded streams each corresponding to each divided region.

19. The reception device according to claim 18, wherein
the reception unit requests a distribution server to transmit the coded streams of a predetermined number of divided regions, and receives the coded streams of a predetermined number of divided regions from the distribution server.

20. A reception method comprising:
a reception step of receiving a coded stream obtained by encoding image data of a wide viewing angle image and receiving rendering meta information including information of a predetermined number of viewpoints registered in groups, by a reception unit; and
a processing step of processing the image data of a wide viewing angle image obtained by decoding the coded stream on a basis of the rendering meta information to obtain display image data, by a processing unit.
